(19) Europäisches Patentamt
European Patent Office
Office européen des brevets

(11) **EP 3 548 282 B1**

(12) **EUROPEAN PATENT SPECIFICATION**

(45) Date of publication and mention
of the grant of the patent:
**15.09.2021   Bulletin 2021/37**

(51) Int Cl.:
*C09J 123/08* (2006.01)     *C08L 23/08* (2006.01)
*B32B 27/32* (2006.01)     *B32B 5/02* (2006.01)
*B32B 7/12* (2006.01)     *B32B 9/04* (2006.01)
*B32B 13/04* (2006.01)     *B32B 15/06* (2006.01)
*B32B 15/12* (2006.01)     *B32B 21/04* (2006.01)
*B32B 21/08* (2006.01)     *B32B 25/04* (2006.01)
*B32B 25/06* (2006.01)     *B32B 27/08* (2006.01)
*B32B 29/00* (2006.01)

(21) Application number: **17803957.4**

(22) Date of filing: **24.11.2017**

(86) International application number:
**PCT/EP2017/080336**

(87) International publication number:
**WO 2018/099816 (07.06.2018 Gazette 2018/23)**

(54) **POLYMER COMPOSITION FOR ADHESIVE APPLICATIONS**

POLYMERZUSAMMENSETZUNG FÜR KLEBEANWENDUNGEN

COMPOSITION DE POLYMÈRE POUR DES APPLICATIONS D'ADHÉSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.12.2016   EP 16201910**

(43) Date of publication of application:
**09.10.2019   Bulletin 2019/41**

(73) Proprietor: **Borealis AG
1220 Vienna (AT)**

(72) Inventors:
• **YALALOV, Denis
44430 Stenungsund (SE)**
• **EK, Carl-Gustaf
426 58 Västra Frölunda (SE)**
• **BERNREITNER, Klaus
4010 Linz (AT)**
• **PRADES, Floran
4040 Linz (AT)**
• **SÖNMEZ, Anil
1050 Vienna (AT)**
• **FAGRELL, Ola
deceased (AT)**

(74) Representative: **Lux, Berthold
Maiwald Patentanwalts- und
Rechtsanwaltsgesellschaft mbH
Elisenhof
Elisenstraße 3
80335 München (DE)**

(56) References cited:
**WO-A1-2008/049637     WO-A1-2009/002845
WO-A1-2011/160964     WO-A1-2015/200016
US-A1- 2007 027 250     US-A1- 2015 240 135**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an ethylene polymer composition for use in adhesive applications, to an article comprising the ethylene polymer composition and to a process for producing said article.

**Background**

Polymer compositions for adhesive applications, like hot melt adhesive or pressure sensitive adhesive applications, are typically thermoplastic based adhesive compositions which are solid at room temperature, but melt quickly upon heating and then, upon cooling, set forming a firm bond e.g. on a substrate. E.g. a hot melt adhesive composition offers the possibility of almost instantaneous bonding which makes it highly suitable for automated production processes.

A hot melt adhesive composition includes typically a base polymer as the main component and other components like for example one or more of a tackifying resin, a plasticizer including wax, an additive(s) and/or a filler.

Important characteristics of a hot melt adhesive composition include, in addition to adhesion properties, softening temperature, cohesion properties and compatibility with other materials, just to mention few properties. Depending on the final application an appropriate hot melt adhesive composition is chosen so that it fulfils the requirements for that specific final application.

The base polymer in a hot melt adhesive composition is typically e.g. a polyolefin (ethylene- or propylene-based polymer), a functionalised polyolefin (ethylene or propylene copolymer with reactive groups), a styrene block copolymer, an ethylene vinyl acetate, etc. The base polymer the main component provides most of the features linked to the cohesive properties of the final HMA compound, e.g. strength, toughness, impact resistance, flexibility and mechanical properties at elevated temperatures.

The cohesion property is believed to be highly important for a hot melt adhesive composition in order to bring a durable solution to substrate movements and conditions appearing during the expected lifetime of the bonded component. The cohesion property means that the bond formed by the adhesive composition e.g. between two surfaces to be bonded together in an article has structural integrity and properties which enable the bond to distribute and withstand the stresses and strains and also enable energy dissipation in the end application use of the article. The man skilled in the art knows that the dissipation of energy within the adhesive composition plays one of the key roles in the cohesion properties of such adhesive composition. I.e. when pulling or shearing apart two surfaces bonded together by means of an adhesive composition of an article, the force which can be contributed to dissipation is normally considerably larger compared to the force due to the surface energy and/or a chemical bond between the substrate and the adhesive composition. Thus, better energy dissipation within the adhesive composition leads to better cohesion properties which then results in better overall bond performance (practical adhesion properties) of such adhesive composition.

Moreover, the cohesion properties of an adhesive composition are essentially provided by the base polymer as the main component.

Inter alia flexibility and elasticity are typically the key properties to determine the cohesive performance of an adhesive composition, like a hot melt adhesive composition. Both properties can be expressed in terms of tensile properties of the composition or polymer, like Tensile strength at yield point (MPa) and strain at yield point. The elasticity is normally defined as the tendency of a material or article to return to its original shape after being deformed. For elastic materials this is often linked to the E-modulus and to properties measured up to the yield point of the material, e.g. the E-modulus of elasticity determined for any point on stress-strain curve up to the yield point of the material as the ratio of tensile stress / tensile elongation, at this particular point, and at the yield point corresponding to the ratio of tensile stress at yield / tensile elongation at yield.

Moreover, good flexibility and tailored elasticity level typically contribute to reduce the pulling force per unit area and to reduce the chances of the crack propagating within a hot melt adhesive composition. This means that said properties contribute in distributing and dissipating the pulling force thereby decreasing the failure of the overall adhesion capability in a hot melt adhesive composition.

Accordingly, the choice of the base polymer is vital in particular for the cohesion properties of the final adhesive composition. As the main component the base polymer typically provides the backbone to the adhesive composition and thus primary mechanical properties such as strength, like in tension and in shear, flexibility and elasticity and, normally, provides also the basis for the heat resistance to the adhesive, like hot melt adhesive, composition.

Additionally, it is important, but challenging, that an adhesive, like hot melt adhesive, composition provides both good cohesion and adhesive performance in order or meet the demands as a bond between two substrates in various end applications. As a prerequisite, both the adhesive strength and cohesive strength of the adhesive formulation should also be (sufficiently) high and balanced with the properties of the substrates to be bonded.

Accordingly, in addition to the cohesion properties, the base polymer should also contribute to the adhesion properties based on the polymer structure and chemistry. However, conventionally in the state of the art, not only the base polymers, but also the other components, for instance tackifying resins, play a marked role for providing the adhesion properties for an adhesive, like hot melt adhesive, composition.

For example, if both the adhesion / adhesive strength is excellent and the cohesive strength is high, the overall bond performance could despite this observation be poor; and will be poor if the flexibility and energy dissipation (cohesive properties both) - which are key ingredients for a good bond performance - are lacking or demonstrate low values.

The elastic recovery, i.e. expressed as lack the ability to recover in the same manner as an ideal rubber material. This, in addition to the ability to provide sufficient adhesion properties to the substrates to bond, is a most important feature for adhesive compounds. Particularly for structural bonding, construction, automotive and assembly etc. it is key that the bonded composite parts are strong as well as flexible and being able to recover back to its original shape after subject to high stress or substantial deformation and in particular at elevated temperatures

The hot melt adhesive compositions are used in a wide variety of applications, for example in combination with nonwoven materials such as for example disposable diapers and sanitary napkins, packaging such as for example case and carton sealing, bookbinding, bottle labelling, woodworking, textile and pressure sensitive application such as for example tapes, films and labels.

In the prior art for instance thermoplastic or crosslinked polyurethane (PUR) and moisture cured silane grafted amorphous polymer of alpha-olefin (APAO-R) has been used as the base polymer for adhesive compositions. The drawback of e.g. APAO-R is usually that only lower amounts, for instance up to around 0.5 wt%, of silane compound can usually be grafted thereto, which low silane content is not sufficient in many hot melt adhesive applications.

US20150240135 of Sika Technology discloses an adhesive composition suitable for vacuum laminating with uncoated aluminium tools [0030]. The composition comprises silane group-containing thermoplastic poly-alpha-olefin and at least one paraffin wax. The poly-alpha-olefin is defined in [0036] containing a priori no heteroatoms, such as oxygen, nitrogen or silicon, unless otherwise stated in the disclosure. Thus the silane compound, which can be e.g. vinyl trimethoxysilane, is introduced to the poly-alpha-olefin after the polymerisation thereof. The poly-alpha-olefin can be produced using Ziegler-Natta or metallocene catalyst and can be homopolymer of ethylene or homopolymer of propylene, see e.g. [0043-0046]. The introduction of the silane compound is carried out by grafting, see [0042]. Grafting is typically carried out by using a peroxide. The use of peroxide has drawbacks due the fact that e.g. simultaneously crosslinks the polyethylene causing an undesired increase in viscosity of the polyethylene component (worsens the processability and thus production rate of the composition). Moreover, the by-products of the peroxide may deteriorate the performance of the final end application, e.g. shorten the end use life of the article. The composition can additionally contain other poly-alpha-olefm polymer which does not contain silane groups, but which can contain e.g. (meth)acrylate comonomer or vinyl acetate, like EVA [0053]. The composition can further contain a catalyst that accelerates the reaction of silane groups (crosslinking), like organic phosphorous or tin compound [0057].

WO 2008/049637 relates to a semiconductive polyolefin composition comprising: (i) up to 80 wt.% of a polyolefin (I), (ii) carbon black, and (iii) optionally up to 60 wt.% of a polymer (II) having a melting point of not less than 100 °C, wherein the polyolefin (I) has a co-monomer content of equal to or less than 4.3 mol%.

WO 2015/200016 describes silane-crosslinkable polymeric compositions comprising a polyolefin having hydrolyzable silane groups, an acidic silanol condensation catalyst, and a phenolic antioxidant having at least one ester-containing moiety.

WO 2009/002845 discloses compositions comprising at least 60 weight percent, based on the total weight of polymers, of at least one silane crosslinkable polyolefin resin and up to about 40 weight percent, based on the total weight of polymers, of at least one polyolefin elastomer resin, wherein the polyolefn polymer elastomer resin has density of less than or equal to about 0,89 $g/cm^3$ and a melt index, $I_2$, of less than about 50 g/10 mm. and which has been prepared using at least one metallocenc catalyst.

US 2007/027250 relates to flame retardant crosslinkable polyolefin compositions comprised of ethylene-silane copolymer, plastomer, flame retardant filler and, optionally, silanol condensation catalyst.

Accordingly, there is a continuous need to find new polymer compositions which would widen the product window in adhesive compositions, and particularly in load bearing applications, e.g. in construction including building, wood-working and automotive applications, and even improve the properties of the adhesive compositions during the production of articles and at the end use of thereof.

**Figures**

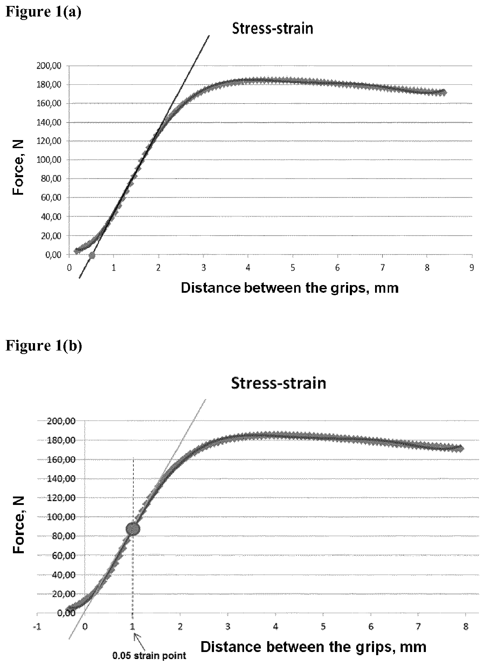

**Figure 1(a) and Figure 1(b)** illustrate the measurement point of Secant E-modulus, Tensile strength and the strain at offset yield point as described below in the specification including "Determination methods" and experimental part.

## Description of the invention

The present invention provides an ethylene polymer composition for adhesive applications which comprises 10.0 to 80.0 wt.-% of a polymer blend of

(a) a copolymer of ethylene which is selected from

(a1) a copolymer of ethylene with silane group(s) containing comonomer; or

(a2) a copolymer of ethylene with one or more polar comonomer(s) selected from $(C_1-C_6)$-alkyl acrylate or $(C_1-C_6)$-alkyl $(C_1-C_6)$-alkylacrylate comonomer(s), which copolymer (a2) bears silane group(s) containing units and which copolymer (a2) is different from the copolymer (a1); and

(b) an ethylene polymer, preferably a copolymer of ethylene with at least one alpha-olefin comonomer, which is selected from one or more of $(C_3-C_{12})$-alkyl, and which polymer (b) is different from copolymer (a1) and copolymer (a2);

wherein the blend comprises, based on the combined amount (100 wt%) of copolymer (a) and polymer (b),

- at least 55 wt%, of the copolymer of ethylene (a); and
- less than 45 wt% of the ethylene polymer (b);

and which polymer composition further comprises
(c) 0.01 to 5.0 wt.-% of additive(s)
(d) 5 to 70 wt.-% of a tackifying resin; and

one or more, or all, of the components (e) to (g), in any combination:

(d);
(e) 0 to 50 wt.-% of a plasticizer;
(f) 0 to 50 wt.-% of a further component(s) other than components (d), (e) and (g); and/or
(g) 0 to 0.1 mol/(kg polymer of ethylene (a)) of a crosslinking agent;

wherein the components (d) to (g) are different from the components (a) to (c).

Each component (a) to (g) is different from the other components (a) to (g).

The ethylene polymer composition for adhesive applications of the invention as defined above, below or in claims is referred herein also shortly as "polymer composition", "composition" or "adhesive composition".

The polymer blend of copolymer of ethylene (a) and ethylene polymer (b) as defined above, below or in claims is referred herein also shortly as "polymer blend" or "blend". The copolymer of ethylene (a) and the ethylene polymer (b) as defined above, below or in claims are referred herein also shortly as "copolymer (a)" or "polymer (a)" and respectively, as "polymer (b)".

The copolymer of ethylene with silane group(s) containing comonomer (a1) as defined above, below or in claims is referred herein also shortly as "copolymer of ethylene (a1)", "copolymer (a1)" or "polymer (a1)".

The copolymer of ethylene containing one or more polar comonomer(s) (a2) as defined above, below or in claims is referred herein also shortly as "copolymer of ethylene (a2)", "copolymer (a2)" or "polymer (a2)".

It is understood that the silane group(s) containing units are present, i.e. incorporated, in the polymer (a2).

Herein the silane group(s) containing comonomer of polymer (a1) is different from the polar comonomer of polymer (a2).

The tackifying resin (d) is different from the plasticizer (e). The difference of the terms "tackifying resin" and "plasticizer" is well known to a skilled person.

Unexpectedly, the polymer blend of the composition provides surprisingly advantageous balance between cohesive strength and mechanical properties, like stiffness (indicated herein for instance as E-modulus), which balance is very feasible e.g. for adhesive applications. Preferably the polymer blend of the composition provides one or more or all further advantageous properties selected e.g. from elasticity (indicated herein for instance as elastic recovery), strength (indicated herein for instance as stress at break and/or stress at yield point) and/or toughness, each of which individually or in any combination, or all combined, together with abovementioned cohesive strength and stiffness, further contribute e.g. to the property balance of the blend which is highly feasible e.g. for adhesive compositions. Moreover, very advantageous property balance is preferably maintained at higher temperatures and also at low temperatures, even if the polymer blend of the invention is crosslinked, if desired, with optional crosslinking agent (g). The strength values at higher temperatures demonstrate also the good compatibility of the polymers (a) and (b).

As said the polymer blend of the composition can be crosslinked, if desired. It is surprising that a comparatively small amount of a thermoplastic polymer (b) blended to a crosslinkable copolymer (a) shows after optional crosslinking a marked increase in the cohesive strength, E-modulus and heat deformation resistance at high temperatures, as demonstrated below in the experimental part. Preferably the bend of the composition of the invention shows also highly advantageous elastic recovery indicating that the blend provides high resistance against permanent deformation performance under high thermal load and mechanical stress performance as shown in experimental part (Hot-Set - Elastic recovery (Permanent deformation)).

Preferably, the polymer blend provides said highly advantageous properties within wide temperature window ranging from cold to higher temperatures and, moreover, even in case crosslinking the polymer (a) using the optional crosslinking agent (g), if desired. Accordingly, the polymer blend of the invention further broadens the application window of the crosslinkable polymer (a) in adhesive applications.

Furthermore, the polymer blend of (a) can preferably contribute to adhesion properties of the adhesive composition. Accordingly, the use of polymer (a) may enable, if desired in some adhesive applications, to reduce the amounts of the other conventional components commonly used in the adhesive compositions, e.g. tackifying resin and waxes.

The above stated properties make the polymer blend highly suitable in polymer compositions for various adhesive applications, like in hot melt or pressure sensitive adhesive compositions. Moreover, the present invention enables to use the polymer composition of the invention as adhesive even for high load bearing building and construction applications.

The polymer composition is preferably used in hot melt adhesive applications, which term has a well-known meaning.

The silane group(s) containing comonomer of polymer (a) and the silane group(s) containing units of polymer (b) of the composition can be crosslinked, if desired, using the optional crosslinking agent (g). Moreover, the polymer composition can be used in both non-crosslinked and crosslinked adhesive applications, i.e. without crosslinking or crosslinking the polymer blend.

In one embodiment the crosslinking agent (g) is not present in the polymer composition as defined above, below or in the claims.

In another embodiment the crosslinking agent (g) is present in the polymer composition as defined above, below or in the claims.

Preferably, the crosslinking agent (g) is present in the polymer composition. In this preferable embodiment, the crosslinking agent (g) crosslinks the polymer composition, preferably crosslinks at least the polymer blend. Accordingly, the crosslinking thus further contributes i.a. to the broad temperature range window of the polymer composition which is desired in various adhesive applications.

The invention further provides an article comprising at least one substrate and a polymer composition, as defined above, below or in claims, on said substrate. Preferably the article comprises at least one substrate and an adhesive layer comprising the polymer composition.

Preferably the article of the invention comprises a multilayer element comprising

- a substrate,
- an adhesive layer on said substrate and
- a top layer on said adhesive layer;

wherein the adhesive layer comprises the polymer composition of the invention as defined above, below or in claims.

The invention further provides an adhesive layer which comprises, preferably consists of, the polymer composition of the invention. The adhesive layer has well known meaning and functions to adhere two separate components, like two separate layers together. Accordingly adhesive layer is between these two components, like two separate layers, for adhering purpose.

The invention further provides a process for producing the article as defined above, below or in claims.

The following preferable embodiments, properties and subgroups of the polymer composition, of the components (a) to (g), of the article of the invention, as well as of the production process of the article of the invention are independently generalizable so that they can be used in any order or combination to further define the suitable embodiments of the invention.

**Polymer composition and components (a) to (g) of the invention**

The preferable polymer composition as defined above comprises, preferably consists of,
an ethylene polymer composition which comprises a polymer blend of

    (a) a copolymer of ethylene which is selected from

(a1) a copolymer of ethylene with silane group(s) containing comonomer; or

(a2) a copolymer of ethylene with one or more polar comonomer(s) selected from $(C_1-C_6)$-alkyl acrylate or $(C_1-C_6)$-alkyl $(C_1-C_6)$-alkylacrylate comonomer(s), which copolymer (a2) bears silane group(s) containing units and which copolymer (a2) is different from the copolymer (a1); and

(b) an ethylene polymer, preferably a copolymer of ethylene with at least one alpha-olefin comonomer, which is selected from one or more of $(C_3-C_{12})$-alkyl, and which polymer (b) is different from copolymer (a1) and copolymer (a2);

and which polymer composition further comprises

(c) additive(s);

(d) a tackifying resin; and

one or more, or all, of the components (d) to (g), in any combination:

(e) a plasticizer;

(f) a further component(s) other than components (d), (e) and (g); and/or

(g) a crosslinking agent;

wherein the components (d) to (g) are different from the components (a) to (c),

and wherein the polymer blend has one or two of the following properties:

- a Secant E-modulus at 23°C (for strain 0.05) of at least 5 MPa, when measured from Dumbbell specimens consisting of a crosslinked polymer blend (ISO 527-2/5A/250, cross-linked at 90°C in water bath for 16hrs as described in the specification under "Determination Methods"); and/or
- a Secant E-modulus at 95°C (for strain 0.05) of at least 2 MPa, when measured from Dumbbell specimens consisting of a crosslinked polymer blend (ISO 527-2/5A/250, cross-linked at 90°C in water bath for 16hrs as described in the specification under "Determination Methods").

E-modulus is expressed herein as "secant E-modulus" at a temperature as indicated above or below and for strain 0.05. The sample of polymer of ethylene (a) is crosslinked, as described under "Determination Methods".

The term "a Secant E-modulus at 23°C or 95°C (for strain 0.05) of' means; Straight line is fitted between origin and the point on stress-strain curve corresponding to 0.05 of strain, as shown in Figure 1(b), and the secant E-modulus corresponds to the slope of this line.

The term "strain 0.05" means: First, since the stress-strain curves of the polymer (a) of the present invention do not demonstrate a linear elastic behaviour, the best fit straight line was applied to the steepest slope of the curve and the cross-section point on x-axis taken as a new origin of the curve, i.e. at this point x-Axis = 0 and y-Axis = 0, compare Figure 1(a), so that the stress-strain curve can be represented as shown on Figure 1(b). No extensometer was used.

The changes of the distance between the crosshead grips holding the specimen is noted and taken as changes of specimen gauge length according to ISO 527-2/5A. The initial gauge length of the specimen, i.e. 20 mm at the initial point of the stress-strain curve, is used as the initial length of the specimen in the strain calculation. This means herein that the change of the distance between the grips of 1mm corresponds to a specimen strain of 0.05. The automatic data recording on tensile machine always started once the load reached 2N (so called preload).

The polymer composition (100 wt%) as defined above, below or in the claims comprises:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%, ,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, preferably 5 to 60, preferably 5 to 55, preferably 5 to 50, wt% of a tackifying resin (d);
- 0 to 50 wt%, preferably 0 to 40, preferably 0 to 30, preferably 0 to 20, wt% of a plasticizer (e);
- 0 to 50 wt%, preferably 0 to 40, preferably 0 to 30, wt% of a further component(s) (f) other than the polymer of ethylene (a), ethylene polymer (b), additive (c), tackifying resin (d) and plasticizer (d); and/or

- 0 to 0.1, preferably 0.00001 to 0.1, mol/(kg polymer of ethylene (a)) of a crosslinking agent (g). As well known, "comonomer" refers to copolymerisable comonomer units.

The polymer composition (100 wt%) as defined above, below or in the claims comprises:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%, ,

preferably 10 to 25 wt%, of an ethylene polymer (b), preferably a copolymer of ethylene (b); and wherein the polymer composition 100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, preferably 5 to 60, preferably 5 to 55, preferably 5 to 50, wt% of a tackifying resin (d);
- 0 to 50 wt%, preferably 0 to 40, preferably 0 to 30, preferably 0 to 20, wt% of a plasticizer (e);
- 0 to 50 wt%, preferably 0 to 40, preferably 0 to 30, wt% of a further component(s) (f) other than the polymer of ethylene (a), ethylene polymer (b), additive (c), tackifying resin (d) and plasticizer (d); and/or
- 0 to 0.1, preferably 0.00001 to 0.1, mol/(kg polymer of ethylene (a)) of a crosslinking agent (g);
- a Secant E-modulus at 23°C (for strain 0.05) of at least 5 MPa, when measured from Dumbbell specimens consisting of a crosslinked polymer blend (ISO 527-2/5A/250, cross-linked at 90°C in water bath for 16hrs as described in the specification under "Determination Methods"); and/or
- a Secant E-modulus at 95°C (for strain 0.05) of at least 2 MPa, when measured from Dumbbell specimens consisting of a crosslinked polymer blend (ISO 527-2/5A/250, cross-linked at 90°C in water bath for 16hrs as described in the specification under "Determination Methods").

It is evident that a skilled person can convert the "mol/(kg polymer of ethylene (a)) of a crosslinking agent (g)" to wt% based on the total amount (100 wt%) of the polymer composition depending on the choice of the crosslinking agent suitable for the desired end application, which choice of the crosslinking agent is also within the skills of a skilled person in the art.

Copolymer of ethylene (a):

In one preferable embodiment A1, the polymer (a) is the copolymer of ethylene with silane group(s) containing comonomer (a1). In this embodiment A1, the polymer (a1) does not contain, i.e. is without, a polar comonomer as defined for polymer (a2). Preferably the silane group(s) containing comonomer is the sole comonomer present in the polymer (a1). Accordingly, the copolymer (a1) is preferably produced by copolymerising ethylene monomer in a high pressure polymerization process in the presence of silane group(s) containing comonomer using a radical initiator.

In another preferable embodiment A2, the polymer (a) is the polymer (a2) which contains one or more polar comonomers selected from $(C_1-C_6)$-alkyl acrylate or $(C_1-C_6)$-alkyl $(C_1-C_6)$-alkylacrylate comonomer(s) and which bears silane group(s) containing units.

The polar comonomer is present in the polymer of ethylene (a2) in an amount of 2.5 to 18 mol%, preferably of 2.5 to 15.0 mol%, preferably 4.5 to 12.5 mol%, preferably of 5.4 to 12.5 mol%, when measured according to "Comonomer contents" as described below under the "Determination methods".

Preferably, the polar comonomer of the polymer of ethylene (a2) is selected from one or more $(C_1-C_6)$-alkyl acrylate comonomer, preferably from (C1-C6)-alkyl acrylate comonomer, preferably from methyl acrylate, ethyl acrylate or butyl acrylate comonomer. The polymer (a2) is most preferably a copolymer of ethylene with methyl acrylate comonomer and bears silane group(s) containing units. Without binding to any theory, for instance, methyl acrylate (MA) is the only acrylate which cannot go through the ester pyrolysis reaction, since does not have this reaction path. Therefore, the polymer (a2) with MA comonomer does not form any harmful free acid (acrylic acid) degradation products at high temperatures, whereby polymer (a2) of ethylene and methyl acrylate comonomer contribute to good quality and life cycle of the end article thereof. This is not the case e.g. with vinyl acetate units of EVA, since EVA forms at high temperatures harmful acetic acid degradation products. Moreover, the other acrylates like ethyl acrylate (EA) or butyl acrylate (BA) can go through the ester pyrolysis reaction, and if degrade, would form volatile olefinic by-products.

The silane group(s) containing units can be present polymer (a2) as a comonomer (as in polymer (a1)) or as a compound grafted chemically to the polymer (a2). In general, copolymerisation of the silane group(s) containing comonomer to ethylene monomer and grafting of the silane group(s) containing units are well-known techniques and well documented in the polymer field and within the skills of a skilled person.

Grafting is incorporating, after polymerization of an ethylene polymer, a compound of silane group(s) containing units chemically (using e.g. peroxide) into the backbone of the produced ethylene polymer.

Preferably the silane group(s) containing units are present as a comonomer in the polymer (a2). In this embodiment the polymer (a2) is preferably produced by copolymerizing ethylene monomer in the presence of a polar comonomer and a silane group(s) containing comonomer. The copolymerization is preferably carried out in a high pressure reactor using a radical initiator.

The copolymerisation of the silane group(s) containing comonomer into the polymer backbone provides more uniform incorporation of the units compared to grafting of the units. Moreover, compared to grafting, the copolymerisation does not require the addition of peroxide after the polymer is produced. Whereas grafting typically requires an addition of peroxide to the polymer after the polymerization. It is known that such peroxide addition brings limitations to the choice of MFR of the starting polymer (during grafting the MFR level of the starting polymer decreases), for the polymer composition to be suitable for an adhesive composition in the end application article. Furthermore, the by-products formed from peroxide during the grafting process can deteriorate the quality of the polymer at the end use application as adhesive composition, like in a hot melt adhesive composition.

The silane group(s) containing comonomer of polymer (a1) and silane group(s) containing comonomer (in case copolymerized) or compound (in case of grafting), preferably silane group(s) containing comonomer, of polymer (a2), is preferably a hydrolysable silane group(s) containing comonomer or compound. Such hydrolysable silane group(s) containing comonomer or compound can be crosslinked, if desired. Accordingly, the silane group(s) containing comonomer/compound is suitably a hydrolysable unsaturated silane compound represented by the formula

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
each $R^2$ is independently an aliphatic saturated hydrocarbyl group,
Y which may be the same or different, is a hydrolysable organic group and
q is 0, 1 or 2.

Special examples of the unsaturated silane compound (I) are those wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl- or arylamino group; and $R^2$, if present, is a methyl, ethyl, propyl, decyl or phenyl group.
Further suitable silane group(s) containing comonomer is e.g. gamma-(meth)acryl-oxypropyl trimethoxysilane, gamma(meth)acryloxypropyl triethoxysilane, and vinyl triacetoxysilane, or combinations of two or more thereof.

One a suitable subgroup of comonomer of formula (I) is an unsaturated silane compound or, preferably, comonomer of formula (II)

$$CH_2=CHSi(OA)_3 \qquad (II)$$

wherein each A is independently a hydrocarbyl group having 1-8 carbon atoms, suitably 1-4 carbon atoms.

The silane group(s) containing comonomer of the invention is preferably a comonomer of formula (I), preferably of formula (II), preferably vinyl trimethoxysilane, vinyl bismethoxyethoxysilane, vinyl triethoxysilane, more preferably vinyl trimethoxysilane or vinyl triethoxysilane.

The silane group(s) containing comonomer is preferably present in the polymer of ethylene (a1) or (a2) in an amount (mol%) of 0.06 to 2.0 mol%, preferably 0.1 to 1.6 mol%, preferably 0.2 to 1.4 mol%, preferably 0.2 to 1 mol%, preferably 0.24 to 0.8 mol%, more preferably of 0.3 to 0.8 mol%, preferably 0.3 to 0.5 mol%, when determined according to "Comonomer contents" as described below under "Determination Methods".

In one preferable embodiment (A1), the polymer (a1) is a copolymer of ethylene with silane group(s) containing comonomer according to formula (I), more preferably with silane group(s) containing comonomer according to formula (II), more preferably with silane group(s) containing comonomer according to formula (II) selected from vinyl trimethoxysilane, vinyl bismethoxyethoxysilane, vinyl triethoxysilane or vinyl trimethoxysilane comonomer, as defined above or in claims. Most preferably the polymer (a1) is a copolymer of ethylene with vinyl trimethoxysilane, vinyl bismethoxyethoxysilane, vinyl triethoxysilane or vinyl trimethoxysilane comonomer, preferably with vinyl trimethoxysilane or vinyl triethoxysilane comonomer.

In another preferable embodiment (A2), the polymer (a2) is a copolymer of ethylene with the polar comonomer, as defined above, below or in claims, and with silane group(s) containing comonomer according to formula (I), more preferably with silane group(s) containing comonomer according to formula (II), more preferably with silane group(s) containing comonomer according to formula (II) selected from vinyl trimethoxysilane, vinyl bismethoxyethoxysilane, vinyl triethoxysilane or vinyl trimethoxysilane comonomer, as defined above or in claims. Preferably the polymer (a2) is a copolymer of ethylene with $(C_1-C_4)$-alkyl acrylate comonomer and with vinyl trimethoxysilane, vinyl bismethoxyethoxysilane, vinyl triethoxysilane or vinyl trimethoxysilane comonomer, preferably with vinyl trimethoxysilane or vinyl triethoxysilane comonomer. More preferably the polymer (a2) is a copolymer of ethylene with methyl acrylate comonomer and with vinyl trimethoxysilane, vinyl bismethoxyethoxysilane, vinyl triethoxysilane or vinyl trimethoxysilane comonomer, preferably with vinyl trimethoxysilane or vinyl triethoxysilane comonomer.

The most preferred polymer (a) is the polymer (a2) according to embodiment (A2).

The polymer (a) has preferably a melt flow rate ($MFR_2$) of 0.1 to 500, preferably 0.1 to 150, preferably 0.5 to 50, preferably 0.5 to 20, g/10 min, when measured from a non-crosslinked polymer of ethylene (a) according to ISO 1133 at 190 °C and at a load of 2.16 kg.

The melting temperature (Tm) of the polymer (a) is preferably of 110°C or less, preferably 70 to 110°C, preferably of 80 to 110°C, preferably of 85 to 110°C, when determined as described below under "Determination Methods".

As to polymerization process, preferably, the polymerization process of the polymer of ethylene (a) is carried out in a high pressure polymerisation process using a radical initiator.

In a preferable embodiment the polymer (a) is produced by polymerizing ethylene with one or more polar comonomer(s) (only in case of copolymer (a2)) and with silane group(s) containing comonomer (in case of (a1) and preferably of (a2)) as defined above in a high pressure (HP) process using free radical polymerization in the presence of one or more initiator(s) and optionally using a chain transfer agent (CTA) to control the MFR of the polymer. The HP reactor can be e.g. a well-known tubular or autoclave reactor or a mixture thereof, suitably a tubular reactor. The high pressure (HP) polymerization and the adjustment of process conditions for further tailoring the other properties of the polymer depending on the desired end application are well known and described in the literature, and can readily be used by a skilled person. Suitable polymerization temperatures range up to 400 °C, suitably from 80 to 350°C and pressure from 70 MPa, suitably 100 to 400 MPa, suitably from 100 to 350 MPa. The high pressure polymerization is generally performed at pressures of 100 to 400 MPa and at temperatures of 80 to 350 °C. Such processes are well known and well documented in the literature and will be further described later below.

The incorporation of the silane group(s) containing comonomer(s), and in case of polymer (a2), the polar comonomer, as well as the control of the comonomer feed to obtain the desired final comonomer content can be carried out in a well-known manner and is within the skills of a skilled person.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R. Klimesch, D. Littmann and F.-O. Mähling pp. 7181-7184.

Such HP polymerization results in a so called low density polymer of ethylene (LDPE), herein with the optional (polar) comonomer as defined above or in claims and with optional, and preferable silane group(s) containing comonomer as the silane group(s) containing units (b). The term LDPE has a well-known meaning in the polymer field and describes the nature of polyethylene produced in HP, i.e. the typical features, such as different branching architecture, to distinguish the LDPE from PE produced in the presence of an olefin polymerization catalyst (also known as a coordination catalyst). Although the term LDPE is an abbreviation for low density polyethylene, the term is understood not to limit the density range of the polymer (a), but covers the LDPE-like HP polyethylenes with low, medium and higher densities.

Ethylene polymer (b):

The polymer (b) can be a homopolymer or copolymer of ethylene.

The polymer (b) is preferably a copolymer of ethylene with one or more alpha-olefin comonomer(s), preferably with one or more of $(C_3-C_{12})$-alpha-olefin comonomer(s), preferably with one or more $(C_4-C_{10})$-alpha-olefin comonomer(s). Suitable alpha-olefin comonomer(s) include, 1-butene, 1-hexene, 1-octene, preferably 1-octene.

The density of polymer can vary within wide area and can be chosen depending on the desired adhesive application. The polymer (b) has suitably a density of 860 to 970kg/m$^3$, suitably 880 to 970 kg/m$^3$, suitably 900 to 970 kg/m$^3$, suitably of 908 to 955, preferably of 908 to 945, kg/m$^3$.

The melt flow rate, MFR, of the polymer (b) can vary within wide area and can be chosen depending on the desired adhesive application. The polymer (b) has suitably a melt flow rate ($MFR_2$) of 0.1 to 2000, suitably 0.1 to 1500, preferably 0.1 to 200, preferably 0.1 to 150, preferably 0.5 to 50, preferably 0.5 to 45, 0.5 to 45, g/10 min, when measured from a non-crosslinked polymer of ethylene (a) according to ISO 1133 at 190 °C and at a load of 2.16 kg.

The melting temperature (Tm) of the polymer (b) is preferably of 130 or less, preferably 85 to 130 °C, preferably of 75 to 130°C, preferably 70 to 130°C, when determined as described below under "Determination Methods".

In one embodiment the polymer (b) is a preferably a copolymer of ethylene with at least one $C_3$ to $C_{10}$ alpha-olefin. The polymer (b) has preferably one or all, preferably all, of the below properties

- a density of 860 to 970kg/m$^3$, suitably 880 to 970 kg/m$^3$, suitably 900 to 970 kg/m$^3$, suitably of 908 to 955, preferably of 908 to 945, kg/m$^3$,
- MFR$_2$ of 0.1 to 2000, suitably 0.1 to 1500, preferably of 0.1 to 200 g/10min, preferably of 0.1 to 150, preferably of 0.5 to 50, preferably of 0.5 to 45, preferably of 0.5 to 45, g/10 min,
- melting temperature (Tm) of 130 or less, preferably of 85 to 130 °C, preferably of 75 to 130°C, preferably of 70 to 130°C and/or
- the alpha-olefin comonomer is octene.

The polymer (b) can be produced in any conventional polymerization process using a conventional single site (SS) catalyst, including any conventional metallocene catalyst, or using a conventional Ziegler-Natta (ZN) catalyst or a mixture of a ZN and SS catalyst. The terms SS catalyst including metallocene catalyst, and ZN catalyst have a well-known meaning in the prior art and well described in the polyolefin catalyst literature.

The suitable polymerization processes for producing polymer (b) can be any conventional polymerization process including solution polymerization, slurry (including loop) polymerization or gas phase polymerization processes, which all have a very well-known meaning in the art and well described in the polymer polymerization process literature. Preferably the polymer (b) is produced in a solution polymerization process.

In one embodiment, the polymer (b) is produced using a SS catalyst.

In another alternative embodiment, the polymer (b) is produced using a ZN catalyst.

The choice of the polymer (b) depends on the desired end application and can vary within the frame giving above and can be chosen by a skilled person in the art.

Preferably the polymer blend of polymer (a) and polymer (b) has one or more, or all, in any order, of the below advantageous mechanical properties which contribute to properties of the final adhesive composition:
Preferably, the Secant E-modulus at 23°C (for strain 0.05) of the polymer blend is at least 5 MPa, preferably at least 10, preferably of at least 15, preferably of 5 to 350, preferably of 10 to 350, preferably of 15 to 200, preferably of 15 to 200, more preferably 17 to 150 MPa when measured from Dumbbell specimens consisting of a crosslinked polymer blend (ISO 527-2/5A/250, cross-linked at 90°C in water bath for 16hrs as described in the specification under "Determination Methods").

Preferably, Secant E-modulus at 95°C (for strain 0.05) of the polymer blend of at least 2 MPa, preferably of at least 4, preferably of at least 6, preferably of 2 to 200, preferably of 4 to 200, preferably of 6 to 200, preferably of 6 to 90, preferably of 8 to 90, MPa when measured from Dumbbell specimens consisting of a crosslinked polymer blend (ISO 527-2/5A/250, cross-linked at 90°C in water bath for 16hrs as described in the specification under "Determination Methods").

Preferably the polymer blend has very advantageous Elastic recovery properties indicated herein e.g. Permanent deformation (%) and, respectively, Elongation (%) after a certain time point. The Hot-Set measurement is described specification under "Determination Methods".
The polymer blend has preferably a Permanent deformation (%) at 160°C Hot-Set oven of 4% or less, preferably 3% or less, preferably 2% or less.

The polymer blend has preferably an Elongation (%) at 160°C Hot-Set oven (elongation (%) after 15 min, load 20 N/cm$^2$) of 200% or less, preferably 200 to 0%, preferably 150% or less, preferably 100% or less, 0 to 100%, preferably 2 to 100%, preferably 2 to 60%, preferably 2 to 50%, preferably 5 to 50%.

The polymer blend has preferably a Permanent deformation (%) at 200°C Hot-Set oven of 5% or less, preferably 4% or less, preferably 3% or less.

The polymer blend has preferably an Elongation (%) at 200°C Hot-Set oven (elongation (%) after 15 min, load 20 N/cm$^2$) of 60% or less, preferably 0 to 60%, preferably 50% or less, preferably 5 to 50%, preferably 0 to 50%.

The polymer blend of polymer (a) and (b) has preferably a Tensile strength at offset yield point (MPa) at 23°C (for strain 0.05) of 0.3 or more, preferably of 0.5 or more, preferably of 0.7 to 30.0, 0.7 to 20, 0.7 to 10 preferably of 0.9 to 8.0, MPa when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and (b) has preferably a Tensile strength at offset yield point (MPa) at 95°C (for strain 0.05) of 0.1 or more, preferably of 0.2 or more, preferably of 0.3 to 8.0, preferably of 0.4 to 6.0, MPa when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and (b) has preferably a Tensile strength at break (MPa) at 23°C of 5 MPa or more, preferably of 7 or more, preferably of 7 to 50, preferably of 7 to 40, 7 to 30, preferably of 10 to 25, MPa when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and (b) has preferably a Tensile strength at break (MPa) at 95°C of 1 MPa or more, preferably of 1.5 or more, preferably of 2 to 30, 2 to 20, preferably of 2 to 15, preferably of 2.5 to 10, MPa when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and (b) has preferably Elongation at break (%) at 23°C of 100% or more, preferably 150 or more, preferably of 40 to 600, preferably 40 to 550, % when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and (b) has preferably Elongation at break (%) at 95°C of 20% or more, preferably 40 or more, preferably of 20 to 500, preferably 20 to 450, % when measured from Dumbbell specimens consisting of a crosslinked polymer blend (ISO 527-2/5A/250, crosslinked at 90°C in water bath for 16hrs as described in the specification under "Determination Methods").

The polymer blend of polymer (a) and polymer (b) has preferably

- Flexibility$_{+95}$ (1/MPa$^2$) at 95°C of less than 2000, preferably less than 1500, most preferably less than 1000, preferably 20 to 1000, (1/MPa$^2$) when calculated according to the following equation (A$_{+95}$):

$$\text{Flexibility}_{+95} = \text{SAY} * 100000/(\text{TSY} * \text{E}) \quad (\text{A}_{+95}) \quad (\text{at } 95°C)$$

wherein in equation (A$_{+23}$) and equation (A$_{+95}$):

SAY is the strain at offset yield point = 0.05 (at 23°C and, respectively at 95°C) (when measured from Dumbbell specimens consisting of a crosslinked polymer blend (ISO 527-2/5A/250, cross-linked at 90°C in water bath for 16hrs as described in the specification under "Determination Methods")),

TSY is the tensile strength at offset yield point value (for strain 0.05, at 23°C and, respectively at 95°C), in MPa (when measured from Dumbbell specimens consisting of a crosslinked polymer blend (ISO 527-2/5A/250, cross-linked at 90°C in water bath for 16hrs as described in the specification under "Determination Methods")), and

E is the Secant E-modulus value (for strain 0.05, at 23°C and, respectively at 95°C), in MPa (when measured from Dumbbell specimens consisting of a crosslinked blend (ISO 527-2/5A/250, cross-linked at 90°C in water bath for 16hrs as described in the specification under "Determination Methods")).

As to polymer of ethylene (a), typically, and preferably the density of the polymer of ethylene (a), is higher than 860 kg/m$^3$. Preferably the density is not higher than 970 kg/m$^3$, and preferably is from 920 to 960, preferably 930 to 960, preferably 940 to 955, kg/m$^3$, according to ISO 1872-2 as described below under "Determination Methods".

Additives (c):

The additives (c) are different from polymer (a), polymer (b) and the optional components (d) to ( g). The additives (c) of the polymer composition are e.g. conventional additives suitable for the desired end application and within the skills of a skilled person, including without limiting to, preferably at least antioxidant(s) (for example sterically hindered phenols, phosphites/phosphonites, sulphur containing antioxidants, alkyl radical scavengers, aromatic amines, hindered amine stabilizers, or blends thereof) and UV light stabilizer(s) (for example hindered amine light stabilizers), and may also include scorch retardants, metal deactivator(s), nucleating agent(s), clarifier(s), brightener(s), acid scavenger(s), as well as slip agent(s) or talc etc., or any mixtures thereof. In this context fillers, which have a well-known meaning and are used in higher amounts for filler purpose, are not included in additives, but in further components (f), as described below. Each additive can be used e.g. in conventional amounts, the total amount of additives present in the polymer composition being preferably as defined above. Such additives are generally commercially available and are described, for example, in "Plastic Additives Handbook", 5th edition, 2001 of Hans Zweifel. In one embodiment the polymer composition is without a scorch retardant.

Tackifying resin (d):

As to the tackifying resin (d), the term "tackifying resin" has a well-known meaning in the field. The tackifying resin (d) of the polymer composition can be a molecule or a macro-molecule. Generally it is a chemical compound or a polymer of fairly low molecular weight (Mw), compared to common polymers. The polymer can be from a natural source or from a chemical process or combination thereof. The tackifying resin generally enhances the adhesion of a final adhesive composition, e.g. hot melt adhesive or pressure sensitive adhesive composition. The tackifying resin (d) is preferably selected from one or more of the commercial available tackifying agents. The choice of the tackifying resin (d) depends on the adhesive application and is within the skills of a skilled person. Tackifying resin (d) may for instance be selected from rosins and their derivates, terpenes and modified terpenes, aliphatic, cycloaliphatic and aromatic resins (C5 aliphatic resins, C9 aromatic resins, and C5/C9 aliphatic/aromatic resins), hydrogenated hydrocarbon resins, and their mixtures, terpene-phenol resins, all of which have a well know meaning in the field.

One preferable tackifying resin (d) is a $C_5$-$C_{10}$ aliphatic or aromatic hydrocarbon. Suitably, the tackifying resin (d) as a $C_5$-$C_{10}$ aliphatic or aromatic hydrocarbon having a number average molecular weight (Mn) of 300 to 2000 g/mol. As an example of such tackifying resin (d) i.a. Escorez 1102 and Escorez 1304 supplied by ExxonMobil, or C5 aliphatic resins as Piccotac 1020-E, Piccotac 1095-N and Piccotac 1100-E supplied by Eastman, or C9 aromatic resins e.g. Picco A-10 and Picco A100 supplied by Eastman, or C5 aliphatic/C9 aromatic resins, e.g. Piccotac 6095-E and Piccotac 8095 supplied by Eastman and Super Nevtac 90 supplied by Neville can be mentioned.

The polymer composition comprises a tackifying resin (d). The amount of the tackifying resin (d) is 5 to 70 wt%, suitably 10 to 70 wt%, preferably 20 to 60 wt%, preferably 20 to 55 wt%, preferably 30 to 50wt%, based on the total amount (100wt%) of the polymer composition.

Accordingly, the polymer composition as defined above, below or in the claims comprises:

-    10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
-    at least 55 wt%, preferably 55 to 95 wt%, preferably 60 to 95 wt%, preferably 70 to 95 wt%, preferably 75 to 90 wt%, of a copolymer of ethylene (a); and
-    less than 45 wt%, preferably 5 to less than 45 wt%, preferably 5 to 40 wt%, preferably 5 to 30 wt%, preferably 10 to 25 wt%, of an ethylene polymer (b), preferably a copolymer of ethylene (b); and wherein the polymer composition (100 wt%) further comprises:
-    0.01 to 5.0 wt%, preferably 0.05 to 4.0, preferably 0.05 to 3.0, preferably 0.01 to 2.0, wt% of additive(s) (c); and
-    5 to 70 wt%, suitably 10 to 70 wt%, preferably 20 to 60, preferably 20 to 55, preferably 30 to 50, wt% of a tackifying resin (d); and optionally

one or more, or all, of the components (e) to (g), in any combination:

- 0 to 50 wt%, preferably 0 to 40, preferably 0 to 30, preferably 0 to 20, wt% of a plasticizer (e);
- 0 to 50 wt%, preferably 0 to 40 wt%, preferably 0 to 30 wt%, of a further component(s) (f) other than the polymer (a), polymer (b), additive (c), tackifying resin (d) and plasticizer (e); and/or
- 0 to 0.1, preferably 0.00001 to 0.1, mol/(kg polymer of ethylene (a)) of a crosslinking agent (g); based on the total amount (100wt%) of the polymer composition.

Optional components (e) to (g):

The optional plasticizer (e) of the polymer composition according to the present invention can be preferably selected from: mineral based oil, petroleum based oil, liquid resin, liquid elastomer, polybutene, polyisobutene, phthalate plasticizer, benzoate plasticizer, epoxidized soya oil, vegetal oil, olefin oligomer, low molecular weight polymer, solid plasticizer, wax and any mixtures thereof. The term "wax" refers to an organic substance having a weight average molecular weight (Mw, GPC) of < 10000 g/mol, which is solid at normal temperature and becomes liquid when heated, and is commonly considered a "wax". There is not a particular limitation on the type of wax as long as the adhesive composition according to the invention can be obtained. Examples of known and commercially available waxes are: micro crystalline wax, synthetic wax and paraffin wax, such as Licowax PE520, Licocene PE5301, Licocene PE4201, Licocene PP1602 available from Clariant. In this invention wax is not calculated to "polymeric components". Moreover, the optional plasticizer (e) other than wax can also be e.g. a commercial plasticizer suitable for adhesive applications. As an example of such plasticizer (e) are plasticizers of Platinol series available from BASF (phthalate based plasticizers) can be mentioned.

The amount of the plasticizer (e), if present, is preferably 2.0 to 50 wt%, preferably 3.0 to 40wt%, preferably 4.0 to 30wt%, preferably 5.0 to 20wt%, based on the total amount (100wt%) of the polymer composition.

Preferably the plasticizer (e) is present in the polymer composition.

Accordingly, in another preferable embodiment (embodiment 2), the polymer composition as defined above, below or in claims preferably comprises:

-    10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),

- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, preferably 5 to 60, preferably 5 to 55, preferably 5 to 50, wt% of a tackifying resin (d); and
- 2.0 to 50 wt%, preferably 3.0 to 40, preferably 4.0 to 30, preferably 5.0 to 20, wt% of a plasticizer (e); and optionally

one or more, or all, of the components (f) and (g), in any combination:

- 0 to 50 wt%, preferably 0 to 40 wt%, preferably 0 to 30 wt%, of a further component(s) (f) other than the polymer (a), polymer (b), additive (c), tackifying resin (d) and plasticizer (e); based on the total amount (100wt%) of the polymer composition; and/or
- 0 to 0.1, preferably 0.00001 to 0.1, mol/(kg polymer of ethylene (a)) of a crosslinking agent (g). In one more preferable embodiment (embodiment 3), the polymer composition as defined above, below or in claims preferably comprises:
- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%, preferably 10 to 25 wt%, of an ethylene polymer (b), preferably a copolymer of ethylene (b);

and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, suitably 10 to 70 wt%, preferably 20 to 60, preferably 20 to 55, preferably 30 to 50, wt% of a tackifying resin (d);
- 2.0 to 50 wt%, preferably 3.0 to 40, preferably 4.0 to 30, preferably 5.0 to 20, wt% of a plasticizer (e); and optionally

one or two, or both, of the components (f) and (g), in any combination:

- 0 to 50 wt%, preferably 0 to 40 wt%, preferably 0 to 30 wt%, of a further component(s) (f) other than the polymer (a), polymer (b), additive (c), tackifying resin (d) and plasticizer (e); based on the total amount (100wt%) of the polymer composition; and/or
- 0 to 0.1, preferably 0.00001 to 0.1, mol/(kg polymer of ethylene (a)) of a crosslinking agent (g). The further component(s) (f), if present, can be for instance a further polymer(s) other than the polymer (a), (b) and plasticizer (d); and/or a filler(s), e.g. any commercially available polymer commonly used for adhesive applications and compatible with the polymer (a) and other components of the polymer composition. The type of the optional further polymer(s) as the optional component (f) is not limited and can be chosen depending on the adhesive application and is within the skills of a skilled person. If present, then the amount of the polymer(s) as the optional further component(s) is preferably from 3 to 30.0wt% based on the total amount (100wt%) of the polymer composition. The further component(s) (f) can also be e.g. a filler, e.g. a commercially available filler product. The term "filler" has a well-known meaning in the field. If present, then the amount of the filler as the optional further component(s) (f) is preferably from 1.0 to 30.0wt% based on the total amount (100wt%) of the polymer composition. As examples of mineral fillers for instance the precipitated calcium carbonates (e.g. Calofort, Calopake and Multifex-MM available from Specialty Minerals Inc.), ground calcium carbonates, dolomites and talcs can be mentioned.

The amount of the further component(s) (f), if present in any of the above preferable polymer compositions, is preferably of 1.0 to 40.0wt%, preferably 3.0 to 30.0wt%, preferably 5.0 to 30.0wt%, based on the total amount (100wt%) of the polymer composition. The amount means the total amount of all further component(s) (f) present in the polymer composition.

Preferably no further polymer(s) as further component(s) (f) is present in the polymer composition. Preferably no further component(s) (f) is present in the polymer composition.

In one preferable embodiment the polymer composition comprises polymer (a) and polymer (b), preferably consists of polymer (a) and polymer (b), as the sole "polymeric components".

Preferably, the polymer composition is used in crosslinkable adhesive applications. More preferably the polymer composition, preferably at least the polymer (a), is crosslinkable. More preferably, the polymer composition, preferably at least the polymer (a), is crosslinked via the silane units (as comonomer in polymer (a1) and in case polymer (a2) as compound (grafted or added separately to polymer (a2)) or preferably as comonomer in polymer (a2)).

The polymer composition which is crosslinked for instance using a crosslinking agent has a typical network, i.a. interpolymer crosslinks (bridges), as well known in the field. The crosslinking degree, expressed e.g. as Hot set elongation of the polymer composition, preferably of the polymer (a), may vary depending on the end application, as evident for a skilled person.

Accordingly, in one preferable embodiment polymer composition, preferably at least the polymer (a) is crosslinked using a crosslinking agent (g). Thus the crosslinking agent (g) is preferably present in the polymer composition.

The optional and preferable crosslinking agent (g) is preferably a silanol condensation catalyst (SCC) which is selected from SCC group of tin-organic catalysts or aromatic organic sulphonic acids. Accordingly, the preferable hydrolysable silane groups containing units (b) can be crosslinked by hydrolysis and subsequent condensation in the presence of such silanol condensation catalyst (SCC) and $H_2O$ in a manner known in the art.

The preferable SCCs are typically commercially available products.

The silanol condensation catalyst (SCC), which is preferably used for crosslinking the polymer composition, preferably at least polymer (a), is more preferably selected from the group C of carboxylates of metals, such as tin, zinc, iron, lead and cobalt; from a titanium compound bearing a group hydrolysable to a Brönsted acid (preferably as described in WO 2011160964 of Borealis, included herein as reference), from organic bases; from inorganic acids; and from organic acids; suitably from carboxylates of metals, such as tin, zinc, iron, lead and cobalt, from titanium compound bearing a group hydrolysable to a Brönsted acid as defined above or from organic acids, suitably from dibutyl tin dilaurate (DBTL), dioctyl tin dilaurate (DOTL), particularly DOTL; titanium compound bearing a group hydrolysable to a Brönsted acid as defined above; or an aromatic organic sulphonic acid, which is suitably an organic sulphonic acid which comprises the structural element:

$$Ar(SO_3H)_x \qquad (II)$$

wherein Ar is an aryl group which may be substituted or non- substituted, and if substituted, then suitably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis. Such organic sulphonic acids are described e.g. in EP736065, or alternatively, in EP1309631 and EP1309632.

More preferably, the polymer composition, preferably at least the polymer (a), is crosslinked using a silanol condensation catalyst (SCC) which is selected from the above group preferable group C of the SCC, preferably selected from carboxylates of tin or aromatic organic sulphonic acids.

The crosslinking agent (g), preferably SCC, can be subjected to the polymer composition e.g. before the application of the polymer composition on a substrate or during or after the production of the article of the invention. In case the crosslinking agent (g) is added during the production of the article of the invention, then said crosslinking agent (g) can e.g. be applied on a substrate separately, but simultaneously with the polymer composition.

Alternatively, it is also possible to add the crosslinking agent (g) e.g. to the substrate or any other layer of an optional multilayer structure of the article, which substrate or other layer is in contact with the adhesive layer formed from the polymer composition, whereby the crosslinking agent (g) migrates from the substrate or other layer to the polymer composition layer during or after the production of the article.

Preferably, the amount of the optional crosslinking agent (g) is of 0 to 0.1 mol/kg polymer of ethylene (a). Preferably the crosslinking agent (g) is present and in an amount of 0.00001 to 0.1, preferably of 0.0001 to 0.01, more preferably 0.0002 to 0.005, more preferably of 0.0005 to 0.005, mol/kg polymer of ethylene (a).

Accordingly, in further preferable embodiment (embodiment 4), the polymer composition as defined above, below or in claims preferably comprises:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, preferably 5 to 60, preferably 5 to 55, preferably 5 to 50, wt% of a tackifying resin (d); and
- 0.00001 to 0.1 mol/kg polymer of ethylene (a), preferably of 0.0001 to 0.01, more preferably 0.0002 to 0.005, more preferably of 0.0005 to 0.005, mol/kg polymer of ethylene (a) of a crosslinking agent (g); and optionally

one or more, or all, of the components (e) to (f), in any combination:

- 0 to 50 wt%, preferably 0 to 40, preferably 0 to 30, preferably 0 to 20, wt% of a plasticizer (e); and/or
- 0 to 50 wt%, preferably 0 to 40 wt%, preferably 0 to 30 wt%, of a further component(s) (f) other than the polymer of ethylene (a), polymer (b), additive (c), tackifying resin (d) and plasticizer (e); based on the total amount (100wt%) of the polymer composition.

The crosslinking degree can be measured according to hot set measurement as described below under the "Determination methods".

More preferable embodiment (embodiment 5), the polymer composition as defined above, below or in claims is selected from:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, suitably 10 to 70 wt%, preferably 20 to 60, preferably 20 to 55, preferably 30 to 50, wt% of a tackifying resin (d);
- 0.00001 to 0.1 mol/kg polymer of ethylene (a), preferably of 0.0001 to 0.01, more preferably 0.0002 to 0.005, more preferably of 0.0005 to 0.005, mol/kg polymer of ethylene (a) of a crosslinking agent (g); and optionally

one or two, or both, of the components (e) and (f), in any combination:

- 0 to 50 wt%, preferably 0 to 40, preferably 0 to 30, preferably 0 to 20, wt% of a plasticizer (e); and/or
- 0 to 50 wt%, preferably 0 to 40 wt%, preferably 0 to 30 wt%, of a further component(s) (f) other than the polymer of ethylene (a), polymer (b), additive (c), tackifying resin (d) and plasticizer (e); based on the total amount (100wt%) of the polymer composition;
  or
- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt% preferably 5 to less than 45 wt%, preferably 5 to 40 wt%, preferably 5 to 30 wt%,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, preferably 5 to 60, preferably 5 to 55, preferably 5 to 50, wt% of a tackifying resin (d); and
- 2.0 to 50 wt%, preferably 3.0 to 40, preferably 4.0 to 30, preferably 5.0 to 20, wt% of a plasticizer (e);
- 0.00001 to 0.1 mol/kg polymer of ethylene (a), preferably of 0.0001 to 0.01, more preferably 0.0002 to 0.005, more preferably of 0.0005 to 0.005, mol/kg polymer of ethylene (a) of a crosslinking agent (g); and optionally
- 0 to 50 wt%, preferably 0 to 40 wt%, preferably 0 to 30 wt%, of a further component(s) (f) other than the polymer of ethylene (a), polymer (b), additive (c), tackifying resin (d) and plasticizer (e); based on the total amount (100wt%) of the polymer composition.

In even more preferable embodiment (embodiment 6), the polymer composition comprises:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%, ,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, suitably 10 to 70 wt%, preferably 20 to 60, preferably 20 to 55, preferably 30 to 50, wt% of a tackifying resin (d);
- 2.0 to 50 wt%, preferably 3.0 to 40, preferably 4.0 to 30, preferably 5.0 to 20, wt% of a plasticizer (e);
- 0.00001 to 0.1 mol/kg polymer of ethylene (a), preferably of 0.0001 to 0.01, more preferably 0.0002 to 0.005, more preferably of 0.0005 to 0.005, mol/kg polymer of ethylene (a) of a crosslinking agent (g); and optionally
- 0 to 50 wt%, preferably 0 to 40 wt%, preferably 0 to 30 wt% of a further component(s) (f) other than the polymer of ethylene (a), polymer (b), additive (c), tackifying resin (d) and plasticizer (e); based on the total amount (100wt%) of the polymer composition.

In the most preferred embodiment (embodiment 7) the polymer composition comprises, preferably consists of:

- 10.0 to 80.0 wt%, preferably 20.0 to 70.0, preferably 20.0 to 60.0, preferably 25 to 50, wt% of a polymer blend; wherein the blend comprises, based on the combined amount (100 wt%) of copolymer (a) and polymer (b),
- at least 55 wt%, preferably 55 to 95 wt%, preferably 60 to 95 wt%, preferably 70 to 95 wt%, preferably 75 to 90 wt%, of a copolymer of ethylene (a); and
- less than 45 wt%, preferably 5 to less than 45 wt%, preferably 5 to 40 wt%, preferably 5 to 30 wt%,

preferably 10 to 25 wt%, of an ethylene polymer (b), preferably a copolymer of ethylene (b); and wherein the polymer composition (100 wt%) further comprises:

- 0.01 to 5.0 wt%, preferably 0.05 to 4.0, preferably 0.05 to 3.0, preferably 0.01 to 2.0, wt% of additive(s) (c);
- 5 to 70 wt%, suitably 10 to 70 wt%, preferably 20 to 60, preferably 20 to 55, preferably 30 to 50, wt%, a tackifying resin (d);
- 2.0 to 50 wt%, preferably 3.0 to 40, preferably 4.0 to 30, preferably 5.0 to 20, wt% of a plasticizer (e);
- 0.00001 to 0.1 mol/kg polymer of ethylene (a), preferably of 0.0001 to 0.01, more preferably 0.0002 to 0.005, more preferably of 0.0005 to 0.005, mol/kg polymer of ethylene (a) of a crosslinking agent (g).

"Polymeric component(s)" exclude herein any carrier polymer(s) of optional additive or filler product(s), e.g. in master batch(es) of additive(s) or, respectively, filler(s) together with the "carrier polymer", optionally present in the polymer composition of the polymeric layer. Such optional carrier polymer(s) are calculated to the amount of the respective additive or, respectively, filler based on the amount (100 %) of the polymer composition. As said earlier, also the optional plasticizer (e) is excluded from the definition of "polymeric component(s)".

Naturally, it is within the skills of a skilled person to choose the optional components (c) to (g) to be compatible with the polymer blend of (a) and (b).

The polymer composition can be produced at least partly (i.e. at least part of the components (a) to (g)) separately before producing the article or in connection with the production process of said article. The mixing of the components is within the skills of a skilled person.

The polymer composition is preferably used for adhesive applications, preferably as a hot melt adhesive composition or as a pressure sensitive adhesive composition for use in articles.

Preferably the invention provides an adhesive composition comprising, preferably consisting of, the composition of the invention.

**Article**

The invention thus also provides an article comprising at least one substrate and a polymer composition, as defined above, below or in claims, on said substrate. Preferably the article comprises at least one substrate and an adhesive layer comprising, preferably consisting of, the polymer composition on said substrate.

The article preferably comprises a multilayer element comprising

- a substrate,
- an adhesive layer on said substrate and
- a top layer on said adhesive layer;

wherein the adhesive layer comprises, preferably consists of, the ethylene polymer composition as defined above, below or in claims.

It is to be understood herein that the adhesive layer can be continuous or discontinuous layer, as well-known for a skilled person in the art. Accordingly, the adhesive layer of the polymer composition can be applied on a substrate (or additionally to other optional layers of the article) continuously or discontinuously.

It is to be understood herein that the substrate and top layer can be in any order, i.e. the substrate can be the "inner layer" in the final article, then the top layer being the "outer" layer of the article, or vice versa. The decisive factor is that the adhesive layer is initially applied on the substrate and after that the top layer is introduced on the other surface of the adhesive layer. I.e. decisive is that adhesive layer is as "core layer" between the substrate layer and top layer.

Moreover, e.g. in case of adhesive tape, wherein the tape is winded into a form of tape roll, then it is to be understood that the other surface of the substrate which does not contain the adhesive layer functions as the top layer which is contacted with the other side of the adhesive layer. Or in case of non-woven fiber article, then the fiber forming the non-woven article serves both as a substrate and as a top layer, and the adhesive layer can be continuously or discontinuously applied in the non-woven fiber article. Accordingly, then the adhesive layer is continuously or discontinuously distributed in said non-woven article.

The multilayer element can optionally contain further layers in addition to substrate layer, adhesive layer and top layer. The further layers can be the same as or different from substrate layer or top layer. Moreover, the multilayer element can optionally contain further adhesive layers of the invention.

The substrate and the preferable top layer and optional other layers, if in contact with the further adhesive layer(s), can be any material suitable and compatible for the polymer composition. The choice of the substrate and optional further layers depends on the article and end application thereof and is within the skills of a skilled person. It is to be understood that the substrate and the preferable multilayer element of the article can be of any shape, wherein the substrate has a surface on which the polymer composition can be applied. The optional top layer can then be applied on said adhesive layer. As non-limiting examples of the substrate a fiber, a film, a thread, a strip, a textile, a coating, a foil, a sheet, a board, a plate, a band, a container, like a bottle, or a package can be mentioned, and can be produced using any techniques, e.g. by extrusion or moulding. Furthermore, as non-limiting examples of such substrate material and optional, and preferable, top layer material, for instance, non-woven material, polymeric, elastomeric, wood, glass, paper, carton, metal, concrete and ceramic material can be mentioned. Any substrate material, optional, and preferable, top layer material, and form thereof can be used in any combination with the composition of the invention as the adhesive layer.

In a preferable article of the invention the crosslinking agent (g) is present in the polymer composition. Preferably, the polymer composition of the article of the invention is crosslinked in the presence of the crosslinking agent (g).

Suitably, the article comprises the multilayer element as defined above, wherein the adhesive layer comprises the crosslinking agent (g). In this embodiment it is preferred that the polymer composition of the adhesive layer of the article of the invention is crosslinked in the presence of the crosslinking agent (g).

The adhesive layer preferably comprises at least 70 wt%, preferably at least 80 wt%, preferably at least 90 wt%, preferably 90 to 100 wt%, preferably consists of, the polymer composition of the invention.

The invention further provides an adhesive layer comprising, preferably consisting of the polymer composition.

As said, it is understood that the multilayer element of the article may comprise further layers, depending on the desired end application of the article.

The article of the invention can be used in several adhesive applications. Illustrative adhesive applications of such an article include, but are not limited to, medical applications, construction applications, electrical applications, nonwoven material applications, food or general packaging applications, bookbinding applications, labelling, like bottle labelling applications and pressure sensitive applications. Accordingly, as non-limiting examples of the article of the invention, for instance a sanitary product, a medical or surgical device (such as a bandage or a surgical drape), a tape, a film, a label, a sheet element (for example a plastic, a paper or a nonwoven (multilayer) sheet element), a container, like a bottle (for example a plastic or glass bottle), food package (for example a box) or a can; a board element (for example a cardboard or a wooden board), a case, a furniture or part thereof, a construction element, a vehicle, a book, a bag, a filter, an electrical device, a construction element, a sportswear etc., can be mentioned.

As said, preferably, the polymer composition for the article can be produced at least partly separately before producing the article or in connection with the production process of said article. E.g. at least part of the components including polymer (a) of the polymer composition can be combined together by the producer of the adhesive composition who supplies said composition to article producer (if not the same). In such case the article producer can use the ready-made adhesive composition as such for producing the article or can introduce part of the components to the polymer composition during the article production process. Alternatively, the article producer can combine all the components of polymer composition before or in connection with the article production process.

The invention further provides a process for producing an article of the invention as defined above, below or in claims comprising the polymer composition of the invention as defined above, below or in claims, wherein the process comprises the steps of:

(i) mixing, preferably meltmixing the blend of polymer (a) and polymer (b), part or all of additive(s) (c), component (d) and part or all of the optional components (e) to (g) of the polymer composition of the invention as defined above, below or in the claims, at elevated temperature to form a melt mix of the polymer composition;
(ii) applying the obtained melt mix of the polymer composition on at least one surface of a substrate to form an adhesive layer on the substrate; optionally
(iii) subjecting a top layer on the formed adhesive layer; optionally
(iv) crosslinking the adhesive layer in the presence of a crosslinking agent (g); and
(v) recovering the obtained article.

Preferably, the process comprises the steps of:

(i) mixing, preferably meltmixing the blend of polymer (a) and polymer (b), part or all of additive(s) (c), component (d) and part or all of the optional components (e) to (g) of the polymer composition of the invention as defined above, below or in claims, at elevated temperature to form a melt mix of the polymer composition;
(ii) applying the obtained melt mix of the polymer composition on at least one surface of a substrate to form an adhesive layer on the substrate; optionally, and preferably,
(iii) subjecting a top layer on the formed adhesive layer;
(iv) crosslinking the adhesive layer in the presence of a crosslinking agent (g); and
(v) recovering the obtained article.

It is to be understood that all the components of the polymer composition can be added at step (i); or part of the components (c) and (d) and/or optional components (e) to (g), e.g. part or all of the additives (c) and the optional crosslinking agent (g), can be added to the polymer composition e.g. at time of step (ii) or (iii), like during step (ii) of the process. Alternatively, part of the components can also be introduced to the polymer composition after or during step (v). For instance, e.g. part of the additives (c) and/or crosslinking agent (g), e.g. crosslinking agent (g) may be previously introduced to the substrate and/or to the optional, and preferable, top layer, whereby after step (v) said component(s) (c) and/or (g) can migrate to the adhesive layer of the polymer composition from the substrate and/or the optional, and preferable, top layer of the article. All these alternatives are evident for a skilled person.

Preferably, at least the optional, and preferable, crosslinking agent (g), is introduced to the polymer composition during the production of the article. Accordingly, the crosslinking agent (g) is preferably introduced to (the melt mix of) the polymer composition obtained from step (i) during step (ii) by applying at step (ii) the crosslinking agent (g) on the substrate separately, but simultaneously with the polymer composition obtained from step (i).

The term "meltmixing at elevated temperature" is well-known procedure for a skilled person in the field. Accordingly, "meltmixing at elevated temperature" means herein mixing above the melting or softening point of at least the major polymer component(s) of the obtained mixture and is carried out for example, without limiting to, in a temperature of at least 2 to 20°C above the melting or softening point of polymer component(s). The melting point means melting temperature (Tm) according to determination method as described below under "Determination methods". The softening point of a material is the temperature at which a material softens sufficiently to allow significant flow under a low stress. Softening point of polymer component(s) is expressed herein as Vicat softening point as described below under "Determination methods".

The polymer composition is preferably produced by meltmixing the components in a conventional, e.g. commercially available, mixer, e.g. kneader, in a manner well-known for a skilled person. If desired, the production of the polymer composition may be carried out under inert atmosphere, by using an inert gas such as carbon dioxide or nitrogen, in order to protect said composition.

The resulting polymer composition may then be applied at the step (ii) on the substrate using a variety of coating techniques depending on the desired article/adhesive application as well-known and within the skills of a skilled person. Examples of coating techniques are: hot melt slot die coating, hot melt wheel coating, hot melt roller coating, melt blown coating and spiral spray coating. The application temperature at which the polymer composition is applied on a substrate during step (ii) is typically above the melting point (Tm) or softening point of the polymer composition and is within the skills of a skilled person. The application temperature at step (ii) can e.g. be selected to be above the melting point or softening point of the blend of polymer (a) and polymer (b), or the optional further polymer (f), which one has the highest softening or melting point and is the major polymeric component. Most preferably the application temperature of step (ii) is above the melting point of the polymer (a), which polymer (a) is preferably the major polymeric component of the polymer composition.

Accordingly, for the polymer composition according to this invention, the application temperature at step (ii) is preferably selected to be above the melting point of the main polymer component, which is most preferably the polymer (a). As an example, a suitable application temperature at step (a) can be between 70 to 130°C depending on the type of polymer (a). The application temperature at step (ii) is suitably in the range from 2 °C to 20 °C above the melting point of the polymer (a) and can be chosen by a skilled person.

**Determination Methods**

Unless otherwise stated in the description or in the experimental part, the following methods were used for the property determinations of the polymer composition, polar polymer and/or any sample preparations thereof as specified in the text or experimental part.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$) or 5 kg ($MFR_5$).

**Density**

The density of the polymer was measured according to ISO 1183-2. The sample preparation was executed according to ISO 1872-2 Table 3 Q (compression moulding).

**Comonomer contents:**

**The content (wt% and mol%) of polar comonomer present in the polymer (a2) and the content (wt% and mol%) of silane group(s) containing units (preferably comonomer) present in the polymer composition (preferably in the polymer (a)):**

Quantitative nuclear-magnetic resonance (NMR) spectroscopy was used to quantify the comonomer content of the polymer composition or polymer as given above or below in the context. Quantitative $^1$H NMR spectra recorded in the solution-state using a Bruker Advance III 400 NMR spectrometer operating at 400.15 MHz. All spectra were recorded using a standard broad-band inverse 5 mm probehead at 100°C using nitrogen gas for all pneumatics. Approximately 200 mg of material was dissolved in *1,2*-tetrachloroethane-$d_2$ (TCE-$d_2$) using ditertiarybutylhydroxytoluen (BHT) (CAS 128-37-0) as stabiliser. Standard single-pulse excitation was employed utilising a 30 degree pulse, a relaxation delay of 3 s and no sample rotation. A total of 16 transients were acquired per spectra using 2 dummy scans. A total of 32k data points were collected per FID with a dwell time of 60 $\mu$s, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methylacrylate and vinyltrimethylsiloxane copolymerisation when present in the same polymer. Quantitative $^1$H NMR spectra were processed, integrated and quantitative properties determined using custom spectral analysis automation programs. All chemical shifts were internally referenced to the residual protonated solvent signal at 5.95 ppm.

When present characteristic signals resulting from the incorporation of vinylacytate (VA), methyl acrylate (MA), butyl acrylate (BA) and vinyltrimethylsiloxane (VTMS), in various comonomer sequences, were observed (Randell89). All comonomer contents calculated with respect to all other monomers present in the polymer.

The vinylacytate (VA) incorporation was quantified using the integral of the signal at 4.84 ppm assigned to the *VA sites, accounting for the number of reporting nuclie per comonomer and correcting for the overlap of the OH protons from BHT when resent:

$$VA = (\ I_{*VA} - (I_{ArBHT})/2)\ /\ 1$$

The methylacrylate (MA) incorporation was quantified using the integral of the signal at 3.65 ppm assigned to the 1MA sites, accounting for the number of reporting nuclie per comonomer:

$$MA = I_{1MA} / 3$$

The butylacrylate (BA) incorporation was quantified using the integral of the signal at 4.08 ppm assigned to the 4BA sites, accounting for the number of reporting nuclie per comonomer:

$$BA = I_{4BA} / 2$$

The vinyltrimethylsiloxane incorporation was quantified using the integral of the signal at 3.56 ppm assigned to the 1VTMS sites, accounting for the number of reporting nuclei per comonomer:

$$VTMS = I_{1VTMS} / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$BHT = I_{ArBHT} / 2$$

The ethylene comonomer content was quantified using the integral of the bulk aliphatic (bulk) signal between 0.00 - 3.00 ppm. This integral may include the 1VA (3) and $\alpha$VA (2) sites from isolated vinylacetate incorporation, *MA and $\alpha$MA sites from isolated methylacrylate incorporation, 1BA (3), 2BA (2), 3BA (2), *BA (1) and $\alpha$BA (2) sites from isolated butylacrylate incorporation, the *VTMS and $\alpha$VTMS sites from isolated vinylsilane incorporation and the aliphatic sites from BHT as well as the sites from polyethylene sequences. The total ethylene comonomer content was calculated based on the bulk integral and compensating for the observed comonomer sequences and BHT:

$$E = (1/4)*[ I_{bulk} - 5*VA - 3*MA - 10*BA - 3*VTMS - 21*BHT ]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M / ( E + VA + MA + BA + VTMS )$$

The total comonomer incorporation of a given monomer (M) in mole percent was calculated from the mole fractions in the standard manner:

$$M [mol\%] = 100 * fM$$

The total comonomer incorporation of a given monomer (M) in weight percent was calculated from the mole fractions and molecular weight of the monomer (MW) in the standard manner:

$$M [wt\%] = 100 * ( fM * MW) / ( (fVA * 86.09) + (fMA * 86.09) + (fBA * 128.17) + (fVTMS *$$
$$148.23) + ((1-fVA-fMA-fBA-fVTMS) * 28.05) )$$

randall89: J. Randall, Macromol. Sci., Rev. Macromol. Chem. Phys. 1989, C29, 201.

If characteristic signals from other specific chemical species are observed the logic of quantification and/or compensation can be extended in a similar manor to that used for the specifically described chemical species. That is, identification of characteristic signals, quantification by integration of a specific signal or signals, scaling for the number of reported nuclei and compensation in the bulk integral and related calculations. Although this process is specific to the specific chemical species in question the approach is based on the basic principles of quantitative NMR spectroscopy of polymers and thus can be implemented by a person skilled in the art as needed.

**Alpha-olefin comonomer** content in ethylene polymer (b) was measured in a known manner based on Fourier transform infrared spectroscopy (FTIR) calibrated with 13C-NMR, using Nicolet Magna 550 IR spectrometer together with Nicolet Omnic FTIR software.

Films having a thickness of about 250 $\mu$m were compression molded from the samples. Similar films were made from calibration samples having a known content of the comonomer. The comonomer content was determined from the spectrum from the wave number range of from 1430 to 1100 cm-1. The absorbance is measured as the height of the peak by selecting the so-called short or long base line or both. The short base line is drawn in about 1410 - 1320 cm-1 through the minimum points and the long base line about between 1410 and 1220 cm-1. Calibrations need to be done specifically for each base line type. Also, the comonomer content of the unknown sample needs to be within the range of the comonomer contents of the calibration samples.

**Melting temperature, crystallization temperature ($T_{cr}$), and degree of crystallinity**

The melting temperature Tm of the used polymers was measured in accordance with ASTM D3418. Tm and Tcr were measured with Mettler TA820 differential scanning calorimetry (DSC) on 3+-0.5 mg samples. Both crystallization and melting curves were obtained during 10 °C/min cooling and heating scans between -10 to 200 °C. Melting and crystallization temperatures were taken as the peaks of endotherms and exotherms. The degree of crystallinity was calculated by comparison with heat of fusion of a perfectly crystalline polymer of the same polymer type, e.g. for polyethylene, 290 J/g.

**Tensile properties;** Tensile strength and elongation at break were determined according to ISO 527-2/5A/250. Crosshead speed for testing the tensile strength and elongations was 250 mm/min. Test specimen produced as described in EN ISO 1872-2, specimen type: 5A to ISO 527-2 were used.

Preparation of film tape samples (for tensile property measurements):

The comparative test polymer or inventive test polymer blend was blended with (for crosslinked samples) or without (for non-crosslinked samples) a crosslinking agent (g) which was a sulphonic acid silane condensation catalyst. The amount of the catalyst was of 2.3x10$^{-3}$ mol catalyst / kg polymer composition. The blending was carried out in Brabender mixer at 125°C, kneading time 20min. The obtained mixture was grinded to pellets and the obtained grinded pellets were used for tape extrusion in Collin E20T extruder. The temperature settings in three zones were adjusted to 160, 180 and 180°C. The die was adjusted to 1.7 mm. No water cooling was used only air to avoid the pre cross-linking of the tapes. The extruded film tapes with a thickness of 1.7 +- 0.1 mm were die cut and the dumbbell specimens for tensile measurements were produced as described above under this "Tensile properties" using the film tape samples. The direction of the test specimens was parallel to the original orientation of the extruded tapes. The elongation at break and tensile strength were conducted at 23°C and 95°C with an elongation rate of 250 mm/min.

The produced dumbbell specimens were first crosslinked at 90°C for 16hrs in water bath for measurements from crosslinked samples (XL) or were used directly for measuring tensile property measurements from non-crosslinked samples (UNXL).

**"strain 0.05" definition;** The specimens prepared and tested according to ISO 527-2/5A/250 standard. The term "strain 0.05" means: First, since the stress-strain curves of the polymer (a) of the present invention do not demonstrate a linear elastic behaviour, the best fit straight line was applied to the steepest slope of the curve and the cross-section point on x-axis taken as a new origin of the curve, i.e. at this point x-Axis = 0 and y-Axis = 0, compare Figure 1(a), so that the stress-strain curve can be represented as shown on Figure 1(b). No extensometer was used.

The changes of the distance between the crosshead grips holding the specimen is noted and taken as changes of specimen gauge length according to ISO 527-2/5A. The initial gauge length of the specimen, i.e. 20 mm at the initial point of the stress-strain curve, is used as the initial length of the specimen in the strain calculation. This means herein that the change of the distance between the grips of 1mm corresponds to a specimen strain of 0.05. The automatic data recording on tensile machine always started once the load reached 2N (so called preload).

**Secant E-modulus;** Straight line is fitted between origin and the point on stress-strain curve corresponding to 0.05 of strain, Figure 1b, and the secant E-modulus corresponds to the slope of this line.

**Offset yield point;** the cross-section point between the straight line and stress-strain curve corresponding to 0.05 of strain is taken as offset yield point, Figure 1b.

In the below experimental part the samples were non-crosslinked or crosslinked.

**Hot set measurement;**

First, the test specimen in dumbbell form prepared according to ISO 527-2/5A were taken by already crosslinked film tapes prepared as described above. The hot set elongation as well as the permanent deformation was determined according to IEC 60811-2-1 on test specimen samples as prepared as described above. In the hot set test, a dumbbell of the tested material is equipped with a weight corresponding to a stress of 20 N/cm2. This loaded specimen is put into an oven either at 160°C or at 200°C, as given in text above or below, and after 15 minutes, the elongation is measured based on the gauge length. Subsequently, the weight is removed and the sample is allowed to relax in oven for 5 minutes at 160°C or at 200°C, as given in above or below. Then, the sample is taken out from the oven and cooled down to room temperature. The permanent deformation in % is determined according to the formula; (L1-L0)*(100/L1). Where L0 is the initial gauge length 20mm for ISO 527-2/5A and L1 is the gauge length after the relaxation in oven for 5min at 160°C or at 200°C, as given in above or below.

**Wt%:** % by weight

## Experimental part

**Preparation of polymer (a) component (Copolymer of ethylene with methyl acrylate or, respectively, butyl acrylate comonomer and with vinyl trimethoxysilane comonomer)**

Polymerisation of the polymer (a) component:

Inventive polymer (a) component was produced in a commercial high pressure tubular reactor at a pressure 2500-3000 bar and max temperature 250-300 °C using conventional peroxide initiator. Ethylene monomer and vinyl trimethoxy silane (VTMS) comonomer (silane group(s) containing comonomer); or ethylene monomer, methyl acrylate (MA) or, respectively, butyl acrylate (BA) polar comonomer and vinyl trimethoxy silane (VTMS) comonomer (silane group(s) containing comonomer) were added to the reactor system in a conventional manner. CTA was used to regulate MFR as well known for a skilled person. After having the information of the property balance desired for the inventive final polymer (a) component, the skilled person can control the process to obtain the inventive polymer (a) component.

The amount of the vinyl trimethoxy silane units, VTMS, (=silane group(s) containing units), the amount of MA or, respectively BA, if any, and $MFR_2$ are given in the table 1.

The properties in below tables were measured from the polymer (a) component as obtained from the reactor or from a layer sample as indicated below.

Table 1: Product properties of Inventive Examples

| Polymer (a) component | PE(a)1 | PE(a)2 | PE(a)3 |
|---|---|---|---|
| Properties of the polymer obtained from the reactor | | | |
| $MFR_{2,16}$, g/10 min | 1.0 | 4.8 | 2.5 |
| acrylate content, (wt%) | - | 17 BA | 21 MA |
| Melt Temperature, °C | 108 | 95 | 91.9 |
| VTMS content, (wt%) | 1.9 | 1.75 | 1.8 |
| Density, kg/m$^3$ | 923 | 922 | 948 |

In above table 1 MA denotes the content of methyl acrylate comonomer present in the polymer, BA denotes the content of butyl acrylate comonomer present in the polymer, and VTMS content denotes the content of vinyl trimethoxy silane comonomer present in the polymer.

**Polymer (b) component:**

PE(b)1: Queo1007 (supplied by Borealis), copolymer of ethylene with 1-octene comonomer prepared in a solution polymerisation process using metallocene catalyst. Density of 910 kg/m$^3$, $MFR_2$ of 7 g/10min and melting temperature, $T_m$, of 105°C.

PE(b)2: Stamylex 1066F (supplied by Borealis), copolymer of ethylene with 1-octene comonomer prepared in a solution polymerisation process using Ziegler-Natta catalyst. Density of 919 kg/ m$^3$, MFR$_2$ of 6.6 g/10min and melting temperature, T$_m$, of 124°C.

PE(b)3: Stamylex 2H568 (supplied by Borealis), copolymer of ethylene with 1-octene comonomer prepared in a solution polymerisation process using Ziegler-Natta catalyst. Density of 930 kg/m$^3$, MFR$_2$ of 19 g/10min, and melting temperature, T$_m$, of 120°C.

PE(b)4: Stamylex 4066F-01 (supplied by Borealis), copolymer of ethylene with 1-octene comonomer prepared in a solution polymerisation process using Ziegler-Natta catalyst. Density of 937 kg/m$^3$, MFR$_2$ of 6.2 g/10min, and melting temperature, T$_m$, of 124°C.

**Crosslinking agent (g)**: For crosslinking of inventive and comparative examples, (XL), a masterbatch containing 1.7 wt% dodecyl benzene sulphonic acid as crosslinking catalyst was used in an amount of 5 wt% based on the amount of the used test polymer(s). The carrier polymer of the masterbatch was a conventional low density polyethylene (MFR$_2$=2, Density 923 kg/m$^3$) produced in a HP polymerisation process. Referred in below examples as "catalyst (g)"

**Crosslinked and non-crosslinked inventive examples and comparative examples**

Amounts of components are in wt% based on the blend (100wt%)

**Examples of inventive polymer blends:** Crosslinked or non-crosslinked as indicated in the below tables

1. IE1: 80% PE(a)1 + 20% PE(b)1
2. IE2: 80% PE(a)1 + 20% PE(b)2
3. IE3: 80% PE(a)1 + 20% PE(b)3
4. IE4: 80% PE(a)1 + 20% PE(b)4
5. IE5: 80% PE(a)2 + 20% PE(b)1
6. IE6: 80% PE(a)2 + 20% PE(b)2
7. IE7: 80% PE(a)2 + 20% PE(b)3
8. IE8: 80% PE(a)2 + 20% PE(b)4
9. IE9: 80% PE(a)3 + 20% PE(b)1
10. IE10: 80% PE(a)3 + 20% PE(b)2
11. IE11: 80% PE(a)3 + 20% PE(b)3
12. IE12: 80% PE(a)3 + 20% PE(b)4

**Comparative examples:**

CE1: PE(a)1 component only
CE2: PE(a)2 component only
CE3: PE(a)3 component only
CE4: PE(b)1 component only
CE5: PE(b)2 component only
CE6: PE(b)3 component only
CE7: PE(b)4 component only

**Compounding of inventive examples and comparative examples:** The compounding (sample preparation) and crosslinking for crosslinked samples is described above under "Determination methods" in connection with "Tensile properties".

In the below tables UNXL means non-crosslinked sample (catalyst not present) and XL means crosslinked sample (sample crosslinked in the presence of the catalyst).

**Tensile properties - Tensile strength at break**

**Example 1:** Blends of PE(a)1

|   | 23°C | | |
|---|---|---|---|
|   | Test example | **UNXL, MPa** | **XL, MPa** |
| 1 | IE1 + catalyst (g) | 17.28 / 18.59* | 20.84 |
| 2 | IE2 + catalyst (g) | 16.30 | 17.04 |
| 3 | IE3 + catalyst (g) | 15.56 | 17.4 |
| 4 | IE4 + catalyst (g) | 16.21 | 17.37 |
| 5 | CE1+ catalyst (g) | 16.00* | 21.14 |
| 6 | CE4 | 23.00 | |
| * UNXL only polymer component(s) without catalyst (g) | | | |
|   | 95°C | | |
|   | Test example | **UNXL, MPa** | **XL, MPa** |
| 1 | IE1 + catalyst (g) | 1.73* | 7.39 |
| 2 | IE2 + catalyst (g) | | 6.73 |
| 3 | IE3 + catalyst (g) | | 6.75 |
| 4 | IE4 + catalyst (g) | | 7.14 |
| 5 | CE1 + catalyst (g) | 1.75* | 4.11 |
| 6 | CE4 | 0.87 | |
| * UNXL only polymer component(s) without catalyst (g) | | | |

**Example 2:** Blends of PE(a)2

|   | 23°C | | |
|---|---|---|---|
|   | Test example | **UNXL, MPa** | **XL, MPa** |
| 1 | IE5 + catalyst (g) | 11.37 | 15.41 |
| 2 | IE6 + catalyst (g) | 10.81 | 15.11 |
| 3 | IE7 + catalyst (g) | 11.26 | 13.64 |
| 4 | IE8 + catalyst (g) | 11.16 | 16.62 |
| 5 | CE2 + catalyst (g) | 11.32* | 13.25 |
| 6 | CE4 | 23.00 | |
| * UNXL only polymer component without catalyst (g) | | | |
|   | 95°C | | |
|   | Test example | **UNXL, MPa** | **XL, MPa** |
| 1 | IE5 + catalyst (g) | | 3.50 |
| 2 | IE6 + catalyst (g) | | 3.66 |
| 3 | IE7 + catalyst (g) | | 4.12 |
| 4 | IE8 + catalyst (g) | | 4.24 |
| 5 | CE2 + catalyst (g) | | 1.00 |
| 6 | CE4 | 0.87 | |

**Example 3:** Blends of PE(a)3

| | **23°C** | | |
|---|---|---|---|
| | Test example | **UNXL, MPa** | **XL, MPa** |
| 1 | IE9 + catalyst (g) | 9.41 | 13.38 |
| 2 | IE10 + catalyst (g) | 9.84 | 14.15 |
| 3 | IE11 + catalyst (g) | 9.93 | 13.30 |
| 4 | IE12 + catalyst (g) | 10.74 | 15.82 |
| 5 | CE3 + catalyst (g) | 12.61 * | 12.06 |
| 6 | CE4 | 23.00 | |
| * UNXL only polymer component(s) without catalyst (g) | | | |
| | **95°C** | | |
| | Test example | **UNXL, MPa** | **XL, MPa** |
| 1 | IE9 + catalyst (g) | | 2.67 |
| 2 | IE10 + catalyst (g) | | 3.45 |
| 3 | IE11 + catalyst (g) | | 3.55 |
| 4 | IE12 + catalyst (g) | | 3.88 |
| 5 | CE3 + catalyst (g) | | 1.43 |
| 6 | CE4 | 0.87 | |

**Tensile properties - tensile strength at offset yield point (0.05 strain) (=TSY)**

**Example 4:** Blends of PE(a)1

| | **23°C** | | |
|---|---|---|---|
| | Test example | **UNXL, MPa** | **XL, MPa** |
| 1 | IE1 + catalyst (g) | 3.93 / 5.18* | 4.82 |
| 2 | IE2 + catalyst (g) | 4.57 | 5.19 |
| 3 | IE3 + catalyst (g) | 4.65 | 5.69 |
| 4 | IE4 + catalyst (g) | 5.03 | 6.07 |
| 5 | CE1 + catalyst (g) | 4.31* | 5.58 |
| 6 | CE4 | 3.03 | |
| * UNXL only polymer component(s) without catalyst (g) | | | |
| | **95°C** | | |
| | Test example | **UNXL, MPa** | **XL, MPa** |
| 1 | IE1 + catalyst (g) | 0.18* | 2.15 |
| 2 | IE2 + catalyst (g) | - | 2.64 |
| 3 | IE3 + catalyst (g) | - | 2.80 |
| 4 | IE4 + catalyst (g) | - | 3.04 |
| 5 | CE1 + catalyst (g) | 0.17* | 0.37 |
| 6 | CE4 | 0.04 | |

(continued)

| | 95°C | | |
|---|---|---|---|
| | Test example | **UNXL, MPa** | **XL, MPa** |
| * UNXL only polymer component(s) without catalyst (g) | | | |

**Example 5:** Blends of PE(a)2

| | 23°C | | |
|---|---|---|---|
| | Test example | **UNXL, MPa** | **XL, MPa** |
| 1 | IE5 + catalyst (g) | 1.11 | 1.11 |
| 2 | IE6 + catalyst (g) | 1.65 | 1.68 |
| 3 | IE7 + catalyst (g) | 1.98 | 2.02 |
| 4 | IE8 + catalyst (g) | 2.21 | 2.48 |
| 5 | CE2 + catalyst (g) | 1.27* | 1.28 |
| 6 | CE4 | 3.03 | |
| * UNXL only polymer component(s) without catalyst (g) | | | |
| | 95°C | | |
| | Test example | **UNXL, MPa** | **XL, MPa** |
| 1 | IE5 + catalyst (g) | - | 0.83 |
| 2 | IE6 + catalyst (g) | - | 0.99 |
| 3 | IE7 + catalyst (g) | - | 1.39 |
| 4 | IE8 + catalyst (g) | - | 1.26 |
| 5 | CE2 + catalyst (g) | - | 0.03 |
| 6 | CE4 | 0.04 | |

**Example 6:** Blends of PE(a)3

| | 23°C | | |
|---|---|---|---|
| | Test example | **UNXL, MPa** | **XL, MPa** |
| 1 | IE9 + catalyst (g) | 0.78 | 0.93 |
| 2 | IE10 + catalyst (g) | 1.16 | 1.26 |
| 3 | IE11 + catalyst (g) | 1.33 | 1.49 |
| 4 | IE12 + catalyst (g) | 1.39 | 1.50 |
| 5 | CE3 + catalyst (g) | 0.58* | 0.67 |
| 6 | CE4 | 3.03 | |
| * UNXL only polymer component(s) without catalyst (g) | | | |
| | 95°C | | |
| | Test example | **UNXL, MPa** | **XL, MPa** |
| 1 | IE9 + catalyst (g) | - | 0.44 |
| 2 | IE10 + catalyst (g) | - | 0.63 |
| 3 | IE11 + catalyst (g) | - | 0.92 |

(continued)

| | 95°C | | |
|---|---|---|---|
| | Test example | UNXL, MPa | XL, MPa |
| 4 | IE12 + catalyst (g) | - | 0.88 |
| 5 | CE3 + catalyst (g) | - | 0.07 |
| 6 | CE4 | 0.04 | |

**Tensile properties** - **Secant E-modulus at 0.05 strain (=E)**

**Example 7:** Blends of PE(a)1

| | 23°C | | |
|---|---|---|---|
| | Test example | UNXL, MPa | XL, MPa |
| 1 | IE1 + catalyst (g) | 78.66 / 103.57* | 96.32 |
| 2 | IE2 + catalyst (g) | 91.45 | 103.86 |
| 3 | IE3 + catalyst (g) | 93.05 | 113.76 |
| 4 | IE4 + catalyst (g) | 100.54 | 121.49 |
| 5 | CE1 + catalyst (g) | 86.22* | 111.69 |
| 6 | CE4 | 60.56 | |
| * UNXL only polymer component(s) without catalyst (g) | | | |

| | 95°C | | |
|---|---|---|---|
| | Test example | UNXL, MPa | XL, MPa |
| 1 | IE9 + catalyst (g) | 3.51* | 42.91 |
| 2 | IE10 + catalyst (g) | | 52.73 |
| 3 | IE11 + catalyst (g) | | 56.05 |
| 4 | IE12 + catalyst (g) | | 60.76 |
| 5 | CE3 + catalyst (g) | 3.46* | 7.32 |
| 6 | CE4 | 0.81 | |
| * UNXL only polymer component(s) without catalyst (g) | | | |

**Example 8:** Blends of PE(a)2

| | 23°C | | |
|---|---|---|---|
| | Test example | UNXL, MPa | XL, MPa |
| 1 | IE5 + catalyst (g) | 22.27 | 33.53 |
| 2 | IE6 + catalyst (g) | 32.97 | 40.33 |
| 3 | IE7 + catalyst (g) | 39.56 | 49.55 |
| 4 | IE8 + catalyst (g) | 44.26 | 52.33 |
| 5 | CE2 + catalyst (g) | 25.43* | 25.58 |
| 6 | CE4 | 60.56 | |
| * UNXL only polymer component(s) without catalyst (g) | | | |

(continued)

| | 95°C | | |
|---|---|---|---|
| | Test example | UNXL, MPa | XL, MPa |
| 1 | IE5 + catalyst (g) | | 16.60 |
| 2 | IE6 + catalyst (g) | | 19.78 |
| 3 | IE7 + catalyst (g) | | 27.85 |
| 4 | IE8 + catalyst (g) | | 25.19 |
| 5 | CE2 + catalyst (g) | | 0.67 |
| 6 | CE4 | 0.81 | |

**Example 9:** Blends of PE(a)3

| | 23°C | | |
|---|---|---|---|
| | Test example | UNXL, MPa | XL, MPa |
| 1 | IE9 + catalyst (g) | 15.60 | 18.50 |
| 2 | IE10 + catalyst (g) | 23.11 | 25.11 |
| 3 | IE11 + catalyst (g) | 26.65 | 29.85 |
| 4 | IE12 + catalyst (g) | 27.81 | 29.91 |
| 5 | CE3 + catalyst (g) | 11.69* | 13.31 |
| 6 | CE4 | 60.56 | |

* UNXL only polymer component(s) without catalyst (g)

| | 95°C | | |
|---|---|---|---|
| | Test example | UNXL, MPa | XL, MPa |
| 1 | IE9 + catalyst (g) | | 8.83 |
| 2 | IE10 + catalyst (g) | | 12.62 |
| 3 | IE11 + catalyst (g) | | 18.41 |
| 4 | IE12 + catalyst (g) | | 17.60 |
| 5 | CE3 + catalyst (g) | | 1.33 |
| 6 | CE4 | 0.81 | |

**Tensile properties - Flexibility at 0.05 strain**

**Example 10:** Blends of PE(a)1

| | 23°C | | |
|---|---|---|---|
| | Test example | UNXL, $1/MPa^2$ | XL, $1/MPa^2$ |
| 1 | IE1 + catalyst (g) | 16.16 / 9.32* | 10.78 |
| 2 | IE2 + catalyst (g) | 11.96 | 9.27 |
| 3 | IE3 + catalyst (g) | 11.55 | 7.73 |
| 4 | IE4 + catalyst (g) | 9.89 | 6.78 |
| 5 | CE1 + catalyst (g) | 13.45* | 8.02 |

(continued)

|   |  23°C | | |
|---|---|---|---|
|   | Test example | UNXL, 1/MPa$^2$ | XL, 1/MPa$^2$ |
| 6 | CE4 | 27.27 | |
| * UNXL only polymer component(s) without catalyst (g) | | | |
|   |  95°C | | |
|   | Test example | UNXL, 1/MPa$^2$ | XL, 1/MPa$^2$ |
| 1 | IE1 + catalyst (g) | 8130.62* | 54.32 |
| 2 | TE2 + catalyst (g) | | 35.96 |
| 3 | IE3 + catalyst (g) | | 31.83 |
| 4 | IE4 + catalyst (g) | | 27.09 |
| 5 | CE1 + catalyst (g) | 8371.93* | 1867.23 |
| 6 | CE4 | 152828.35 | |
| * UNXL only polymer component(s) without catalyst (g) | | | |

**Example 11:** Blends of PE(a)2

|   |  23°C | | |
|---|---|---|---|
|   | Test example | UNXL, 1/MPa$^2$ | XL, 1/MPa$^2$ |
| 1 | IE5 + catalyst (g) | 201.61 | 88.94 |
| 2 | IE6 + catalyst (g) | 92.02 | 61.48 |
| 3 | IE7 + catalyst (g) | 63.90 | 40.72 |
| 4 | IE8 + catalyst (g) | 51.06 | 36.52 |
| 5 | CE2 + catalyst (g) | 154.69* | 152.88 |
| 6 | CE4 | 27.27 | |
| * UNXL only polymer component(s) without catalyst (g) | | | |
|   |  95°C | | |
|   | Test example | UNXL, 1/MPa$^2$ | XL, 1/MPa$^2$ |
| 1 | IE5 + catalyst (g) | | 363.02 |
| 2 | IE6 + catalyst (g) | | 255.50 |
| 3 | IE7 + catalyst (g) | | 128.90 |
| 4 | IE8 + catalyst (g) | | 157.57 |
| 5 | CE2 + catalyst (g) | | 222877.62 |
| 6 | CE4 | 152828.35 | |

**Example 12:** Blends of PE(a)3

|   |  23°C | | |
|---|---|---|---|
|   | Test example | UNXL, 1/MPa$^2$ | XL, 1/MPa$^2$ |
| 1 | IE9 + catalyst (g) | 410.68 | 292.14 |
| 2 | IE10 + catalyst (g) | 187.24 | 158.66 |

(continued)

|  | 23°C |  |  |
|---|---|---|---|
|  | Test example | UNXL, $1/MPa^2$ | XL, $1/MPa^2$ |
| 3 | IE11 + catalyst (g) | 140.82 | 112.24 |
| 4 | IE12 + catalyst (g) | 129.34 | 111.80 |
| 5 | CE3 + catalyst (g) | 732.33* | 564.09 |
| 6 | CE4 | 27.27 |  |

* UNXL only polymer component(s) without catalyst (g)

|  | 95°C |  |  |
|---|---|---|---|
|  | Test example | UNXL, $1/MPa^2$ | XL, $1/MPa^2$ |
| 1 | IE9 + catalyst (g) |  | 1282.95 |
| 2 | IE10 + catalyst (g) |  | 627.96 |
| 3 | IE11 + catalyst (g) |  | 295.03 |
| 4 | IE12 + catalyst (g) |  | 322.79 |
| 5 | CE3 + catalyst (g) |  | 56694.22 |
| 6 | CE4 | 152828.35 |  |

**Hot-Set properties** - **Elastic recovery (Permanent deformation)**

Examples 1a, 2a, 3a, 4a, 5a: at 160°C Hot-Set oven temperature, load 20N/cm2.
Examples 1b, 2b, 3b, 4b, 5b: at 200°C(marked red) Hot-Set oven temperature, load 20N/cm2.

Negative values, like "-2", indicates the shrinkage of test sample compared to original sample length.

**Example 13:** Blends of PE(a)1

|  | Test example | Elongation after 2 min, % | Elongation after 15 min, % | Permanent deformation, % |
|---|---|---|---|---|
| 1a | IE1 + catalyst (g) | 27.2 | 27.3 | 0.2 |
| 1b |  | **30.6** | **28.3** | **0** |
| 2a | IE4 + catalyst (g) | 17 | 44 | 1.6 |
| 2b |  | **33** | **35.1** | **1.4** |
| 3a | IE2 + catalyst (g) | 8.8 | 37.4 | 1.5 |
| 3b |  | **38.7** | **38.3** | **1.7** |
| 4a | IE3 + catalyst (g) | 18.7 | 33.9 | 0.4 |
| 4b |  | **36.9** | **40.3** | **-2** |
| 5a | CE1 + catalyst (g) | 17.5 | 17 | -0.8 |

**Example 14:** Blends of PE(a)2

|  | Test example | Elongation after 2 min, % | Elongation after 15 min, % | Permanent deformation, % |
|---|---|---|---|---|
| 1a | IE5 + catalyst (g) | 31.3 | 29.9 | 1.2 |
| 1b |  | **25.5** | **25.3** | **-1.1** |

(continued)

|  | Test example | Elongation after 2 min, % | Elongation after 15 min, % | Permanent deformation, % |
|---|---|---|---|---|
| 2a | IE8 + catalyst (g) | 37.4 | 37.1 | 1.7 |
| 2b | | **31.8** | **30.6** | **2.4** |
| 3a | IE6 + catalyst (g) | 37.6 | 41.2 | 0.6 |
| 3b | | **37.2** | **35.3** | **1** |
| 4a | IE7 + catalyst (g) | 40.3 | 45.7 | -0.1 |
| 4b | | **36.2** | **35.6** | **0.1** |
| 5a | CE2 + catalyst (g) | 22 | 21.7 | 1.3 |
| 5b | | | | |

**Example 15:** Blends of PE(a)3

|  | Test example | Elongation after 2 min, % | Elongation after 15 min, % | Permanent deformation, % |
|---|---|---|---|---|
| 1a | IE9 + catalyst (g) | 17.5 | 18 | -0.8 |
| 1b | | **17.3** | **18.6** | **-0.2** |
| 2a | IE12 + catalyst (g) | 29.7 | 30 | -0.7 |
| 2b | | **16.5** | **17.4** | **0.7** |
| 3a | IE10 + catalyst (g) | 19.6 | 19.6 | 1.7 |
| 3b | | **19.1** | **18.4** | **0.9** |
| 4a | IE11 + catalyst (g) | 19.5 | 19.1 | 0.3 |
| 4b | | **15.6** | **15.7** | **-0.3** |
| 5a | CE3 + catalyst (g) | 13 | 13.4 | 1.3 |
| 5b | | **12.4** | **12.6** | **2.8** |

**Tensile properties - Elongation at break**

**Example 16:** Blends of PE(a)1

|  | 23°C | | |
|---|---|---|---|
|  | Test example | **UNXL, %** | **XL, %** |
| 1 | IE1 + catalyst (g) | 401,4/462,60* | 200,90 |
| 2 | IE2 + catalyst (g) | 378,15 | 208,79 |
| 3 | IE3 + catalyst (g) | 335,90 | 186,90 |
| 4 | IE4 + catalyst (g) | 336,93 | 200,99 |
| 5 | CE1 + catalyst (g) | 400,43* | 180,23 |
| 6 | CE4 | 705,15 | |
| * UNXL only polymer component(s) without catalyst (g) | | | |
|  | **95°C** | | |
|  | Test example | **UNXL, %** | **XL, %** |
| 1 | IE1 + catalyst (g) | 120,24* | 137,82 |

(continued)

|   | 95°C | | |
|---|---|---|---|
|   | Test example | UNXL, % | XL, % |
| 2 | IE2 + catalyst (g) | | 126,74 |
| 3 | IE3 + catalyst (g) | | 95,01 |
| 4 | IE4 + catalyst (g) | | 127,74 |
| 5 | CE1 + catalyst (g) | 88,29* | 126,07 |
| 6 | CE4 | 243,40 | |
| * UNXL only polymer component(s) without catalyst (g) | | | |

### Example 17: Blends of PE(a)2

|   | 23°C | | |
|---|---|---|---|
|   | PE | UNXL, % | XL, % |
| 1 | IE5 + catalyst (g) | 358,57 | 247,85 |
| 2 | IE6 + catalyst (g) | 368,96 | 253,40 |
| 3 | IE7 + catalyst (g) | 352,18 | 241,74 |
| 4 | IE8 + catalyst (g) | 374,96 | 259,21 |
| 5 | CE2 + catalyst (g) | 554,00* | 233,18 |
| 6 | CE4 | 705,15 | |
| * UNXL only polymer component(s) without catalyst (g) | | | |

|   | 95°C | | |
|---|---|---|---|
|   | PE | UNXL, % | XL, % |
| 1 | IE5 + catalyst (g) | | 68,71 |
| 2 | IE6 + catalyst (g) | | 97,84 |
| 3 | IE7 + catalyst (g) | | 85,15 |
| 4 | IE8 + catalyst (g) | | 116,60 |
| 5 | CE2 + catalyst (g) | | 127,51 |
| 6 | CE4 | 243,40 | |

### Example 18: Blends of PE(a)3

|   | 23°C | | |
|---|---|---|---|
|   | PE | UNXL, % | XL, % |
| 1 | IE9 + catalyst (g) | 309,70 | 209,85 |
| 2 | IE10 + catalyst (g) | 287,20 | 230,29 |
| 3 | IE11 + catalyst (g) | 262,85 | 205,87 |
| 4 | IE12 + catalyst (g) | 252,18 | 225,79 |
| 5 | CE3 + catalyst (g) | 646,00* | 193,34 |
| 6 | CE4 | 705,15 | |
| * UNXL only polymer component(s) without catalyst (g) | | | |

(continued)

| | | 95°C | | |
|---|---|---|---|---|
| | | PE | UNXL, % | XL, % |
| | 1 | IE9 + catalyst (g) | | 48,72 |
| | 2 | IE10 + catalyst (g) | | 101,00 |
| | 3 | IE11 + catalyst (g) | | 65,89 |
| | 4 | IE12 + catalyst (g) | | 77,89 |
| | 5 | CE3 + catalyst (g) | | 86,51 |
| | 6 | CE4 | 243,40 | |
| * UNXL only polymer component(s) without catalyst (g) | | | | |

A strong synergistic effect is observed for crosslinked materials, for PE(a) blends with PE(b). As seen in the examples, the cohesive properties of IE compared to CE show:

- Higher secant E-modulus at high temperatures (95°C) demonstrating extended service temperature range.
- Higher and for HMA more attractive tensile strength at offset yield values, in particular for higher temperatures.
- Still attractive and low flexibility values after crosslinking indicating good performance in adhesive applications, e.g. via energy dissipation capabilities especially at high usage temperatures, 95°C. The inventive materials show advantageous lower flexibility levels at high temperatures.
- Higher and for HMA more attractive stress at break values, in particular for higher temperatures.
- As seen in the example, the Hot Set properties of IE compared to CE show:
- High values of elastic recovery (i.e. low level of permanent deformation) for cross-linked materials demonstrating the material's higher resistance against permanent deformation under high thermal load and mechanical stress

For the cross-linked materials the following is observed:

- The cross-linked IEs demonstrating better elastic recovery performance than the blends over CEs.

**Hot melt adhesive (HMA) composition of the invention:**

**Example 1;**
70 wt% of IE8 (blend 80% PE(a)2 + 20% PE(b)4) was blended with 30 wt% of tackifying resin (d) which is Escorez 1102 supplied by ExxonMobil (aliphatic hydrocarbon with softening point of 99.5°C), and crosslinking agent (g) which is catalyst (g). The catalyst was used in amount of 5 wt% based on the amount of IE8 (100wt%).
**Example2;**
60 wt% of IE12 (blend 80% PE(a)3 + 20% PE(b)4) was blended with 40wt% of tackifying resin (d) which is Escorez 1304 (aliphatic hydrocarbon with softening point of 100°C supplied by ExxonMobil), and crosslinking agent (g) which is catalyst (g). The catalyst was used in amount of 5 wt% based on the amount of IE12 (100wt%).

**Test article:**

A layer element consisting of Al- sheet (thickness of 0.5 mm) as substrate layer, Al- sheet (thickness of 0.5 mm) as a top layer and HMA composition of the invention according to above example 1as the adhesive layer between the substrate and top layers. A hot melt of the composition of example 1 was produced in a pot at a temperature of 110°C-140°C by mixing all other components. The obtained hot melt was applied on a substrate layer by spraying and the top layer was then subjected on the formed adhesive layer of the HMA composition of example 1.

**Claims**

1.   An ethylene polymer composition for adhesive applications which comprises 10.0 to 80.0 wt.-% of a polymer blend of

(a) a copolymer of ethylene which is selected from

(a1) a copolymer of ethylene with silane group(s) containing comonomer; or
(a2) a copolymer of ethylene with one or more polar comonomer(s) selected from $(C_1-C_6)$-alkyl acrylate or $(C_1-C_6)$-alkyl $(C_1-C_6)$-alkylacrylate comonomer(s), which copolymer (a2) bears silane group(s) containing units and which copolymer (a2) is different from the copolymer (a1); and

(b) an ethylene polymer which is different from copolymer (a1) and copolymer (a2); wherein the blend comprises, based on the combined amount (100 wt%) of copolymer (a) and polymer (b),

- at least 55 wt%, of the copolymer of ethylene (a); and
- less than 45 wt% of the ethylene polymer (b);

and which polymer composition further comprises,
(c) 0.01 to 5.0 wt.-% of additive(s);
(d) 5 to 70 wt.-% of a tackifying resin; and

one or more, or all, of the components (e) to (g), in any combination:

(e) 0 to 50 wt.-% of a plasticizer;
(f) 0 to 50 wt.-% of a further component(s) other than components (d), (e) and (g); and/or
(g) 0 to 0.1 mol/(kg polymer of ethylene (a)) of a crosslinking agent;

wherein the components (d) to (g) are different from the components (a) to (c).

2. The polymer composition according to claim 1 wherein the polymer blend of a copolymer of ethylene (a) and an ethylene polymer (b) has one or two of the following properties:

- a Secant E-modulus at 23°C (for strain 0.05) of at least 5 MPa, preferably at least 10, more preferably of at least 15, still more preferably of 5 to 350, MPa, when measured from Dumbbell specimens consisting of a crosslinked polymer blend (ISO 527-2/5A/250, cross-linked at 90°C in water bath for 16hrs as described in the specification under "Determination Methods"); and/or
- a Secant E-modulus at 95°C (for strain 0.05) of at least 2 MPa, preferably at least 4, more preferably at least 6, still more preferably of 2 to 200, MPa when measured from Dumbbell specimens consisting of a crosslinked polymer blend (ISO 527-2/5A/250, cross-linked at 90°C in water bath for 16hrs as described in the specification under "Determination Methods");
and/or
wherein polymer blend of a copolymer of ethylene (a) and an ethylene polymer (b) has one or two, or both, preferably both,
- a Permanent deformation (%) at 160°C Hot-Set oven of 4% or less, and/or
- a Permanent deformation (%) at 200°C Hot-Set oven of 5% or less;
and/or
wherein polymer blend of a copolymer of ethylene (a) and an ethylene polymer (b) has one or two, or both, preferably both,
- an Elongation (%) at 160°C Hot-Set oven (elongation (%) after 15 min, load 20 N/cm$^2$) of 200% or less, preferably 0 to 200%, and/or
- an Elongation (%) at 200°C Hot-Set oven (elongation (%) after 15 min, load 20 N/cm$^2$) of 60% or less, preferably 0 to 60%;
and/or
wherein polymer blend of a copolymer of ethylene (a) and an ethylene polymer (b) has one or two, or both, preferably both,
- a Tensile strength at break (MPa) at 23°C of 5 MPa or more, preferably of 7 or more, preferably of 7 to 50, MPa when measured from Dumbbell specimens consisting of a crosslinked polymer blend (ISO 527-2/5A/250, crosslinked at 90°C in water bath for 16hrs), and/or
- a Tensile strength at break (MPa) at 95°C of 1 MPa or more, preferably of 1.5 or more, preferably of 2 to 30, MPa when measured from Dumbbell specimens consisting of a crosslinked polymer blend (ISO 527-2/5A/250, crosslinked at 90°C in water bath for 16hrs);
and/or

wherein polymer blend of a copolymer of ethylene (a) and an ethylene polymer (b) has one or two, or both, preferably both,

- an Elongation at break (%) at 23°C of 100% or more, preferably 150 or more, preferably of 40 to 600, % when measured from Dumbbell specimens consisting of a crosslinked polymer blend (ISO 527-2/5A/250, crosslinked at 90°C in water bath for 16hrs) and/or
- an Elongation at break (%) at 95°C of 20% or more, preferably 40 or more, preferably of 20 to 500, % when measured from Dumbbell specimens consisting of a crosslinked polymer blend (ISO 527-2/5A/250, crosslinked at 90°C in water bath for 16hrs).

3. The polymer composition according to claims 1 or 2
wherein the blend comprises, based on the combined amount (100 wt.-%) of copolymer (a) and polymer (b);

- 55 to 95 wt.-% of the copolymer of ethylene (a); and
- 5 to 45 wt.-% of the ethylene polymer (b), preferably a copolymer of ethylene (b); and wherein the polymer composition (100 wt.-%) further comprises:
- 0.05 to 4-0 wt.-% of additive(s) (c); and/or
- 0.00001 to 0.1 mol/(kg polymer of ethylene (a) of a crosslinking agent (g).

4. The polymer composition according to any one of claims 1 to 3 which comprises a plasticizer (e), preferably the amount of the plasticizer (e) is 2.0 to 50 wt% based on the total amount (100 wt%) of the polymer composition.

5. The polymer composition according to any of the preceding claims, wherein polar comonomer of the polymer of ethylene (a2) is selected from one or more $(C_1-C_6)$-alkyl acrylate comonomer, preferably from $(C_1-C_6)$-alkyl acrylate comonomer, preferably from methyl acrylate, ethyl acrylate or butyl acrylate comonomer.

6. The polymer composition according to any of the preceding claims, wherein the polar comonomer is present in the copolymer of ethylene (a2) in an amount of 2.5 to 18 mol%, preferably the polar comonomer is selected from $(C_1-C_6)$-alkyl acrylate comonomer, more preferably from methyl acrylate, ethyl acrylate or butyl acrylate comonomer.

7. The polymer composition according to any of the preceding claims, wherein the ethylene polymer (b) is a copolymer of ethylene with one or more alpha-olefin comonomer(s), preferably with one or more of $(C_3-C_{12})$-alpha-olefin comonomer(s), preferably with one or more $(C_4-C_{10})$-alpha-olefin comonomer(s), preferably octene comonomer.

8. The polymer composition according to any of the preceding claims, wherein the ethylene polymer (b) has preferably one or all, preferably all, of the below properties

- a density of 860 to 970kg/m$^3$,
- MFR$_2$ of 0.1 to 2000 g/10 min, and/or
- melting temperature (Tm) of 130 or less, preferably of 85 to 130 °C.

9. The polymer composition according to any of the preceding claims, wherein the silane comonomer of copolymer of ethylene (a1) or the silane group(s) containing unit of copolymer of ethylene (a2) is a hydrolysable unsaturated silane compound represented by the formula (I):

$$R^1SiR^2_qY_{3-q} \qquad \text{(I)}$$

wherein

R$^1$ is an ethylenically unsaturated hydrocarbyl, hydrocarbyloxy or (meth)acryloxy hydrocarbyl group,
each R$^2$ is independently an aliphatic saturated hydrocarbyl group,
Y which may be the same or different, is a hydrolysable organic group and
q is 0, 1 or 2;
preferably the amount of silane group(s) containing comonomer present in the copolymer of ethylene (a1) or the amount of silane group(s) containing units present in the copolymer of ethylene (a2) is of at least 0.06 to 2 mol%;
preferably the silane group(s) containing unit of copolymer of ethylene (a2) is a silane group(s) containing comonomer, i.e. silane group(s) containing units (b) of copolymer (a2) are present in the copolymer of ethylene (a2) as a comonomer;

preferably the copolymer of ethylene (a1) and the copolymer of ethylene (a2) are produced by polymerisation in a high pressure polymerisation process using a radical initiator.

10. The polymer composition according to any of the preceding claims wherein the polymer composition, preferably at least the copolymer of ethylene (a), is crosslinkable, preferably wherein the polymer composition comprises the crosslinking agent (g), preferably wherein the polymer composition comprises the crosslinking agent (g) in an amount of 0.00001 to 0.1 mol/kg polymer of ethylene (a);

preferably the copolymer composition of according to any of the preceding claims 1 to 9 is crosslinked in the presence of the crosslinking agent (g).

11. The polymer composition according to any of the preceding claims, wherein the optional crosslinking agent (g) is selected from a silanol condensation catalyst (SCC), which is preferably selected from the group C of carboxylates of metals, such as tin, zinc, iron, lead and cobalt; from a titanium compound bearing a group hydrolysable to a Bronsted acid, from organic bases; from inorganic acids; and from organic acids; suitably from carboxylates of metals, such as tin, zinc, iron, lead and cobalt, from titanium compound bearing a group hydrolysable to a Bronsted acid as defined above or from organic acids, suitably from dibutyl tin dilaurate (DBTL), dioctyl tin dilaurate (DOTL); titanium compound bearing a group hydrolysable to a Brönsted acid as defined above; or an aromatic organic sulphonic acid, which is suitably an organic sulphonic acid which comprises the structural element:

$$Ar(SO_3H)_x \qquad (II)$$

wherein Ar is an aryl group which may be substituted or non- substituted, and if substituted, then suitably with at least one hydrocarbyl group up to 50 carbon atoms, and x is at least 1; or a precursor of the sulphonic acid of formula (II) including an acid anhydride thereof or a sulphonic acid of formula (II) that has been provided with a hydrolysable protective group(s), e.g. an acetyl group that is removable by hydrolysis.

12. An article comprising at least one substrate and a polymer composition according to any of the preceding claims 1 to 11 on said substrate, preferably an article comprising at least one substrate and an adhesive layer comprising the polymer composition according to any of the preceding claims 1 to 11 on said substrate.

13. The article according to claim 12, which comprises a multilayer element comprising

- a substrate,
- an adhesive layer on said substrate and
- a top layer on said adhesive layer;

wherein the adhesive layer comprises the ethylene polymer composition according to any one of claim 1 to 11.

14. The article according to claim 12 or 13, wherein the crosslinking agent (g) is present in the polymer composition and the polymer composition is crosslinked in the presence of the crosslinking agent (g), suitably wherein the article comprises the multilayer element as defined in claim 13, and wherein the adhesive layer comprises the crosslinking agent (g), preferably the polymer composition of the adhesive layer is crosslinked in the presence of the crosslinking agent (g).

15. A process for producing an article according to any of the preceding claims 12 to 14, wherein the process comprises the steps of:

(i) mixing, preferably meltmixing the polymer blend of a copolymer of ethylene (a) and an ethylene polymer (b), part or all of additive(s) (c) and part or all of the optional components (d) to (g) of the polymer composition according to any of the preceding claims 1 to 11 at elevated temperature to form a melt mix of the polymer composition;
(ii) applying the obtained melt mix of the polymer composition on at least one surface of a substrate to form an adhesive layer on the substrate; optionally
(iii) subjecting a top layer on the formed adhesive layer; optionally
(iv) crosslinking the adhesive layer in the presence of a crosslinking agent (g); and
(v) recovering the obtained article.

**Patentansprüche**

1. Ethylenpolymerzusammensetzung für Klebstoffanwendungen, umfassend 10,0 bis 80,0 Gew.-% eines Polymergemisches aus

   (a) einem Copolymer von Ethylen, ausgewählt aus

   (a1) einem Copolymer von Ethylen mit Silangruppe(n) enthaltendem Comonomer; oder
   (a2) einem Copolymer von Ethylen mit einem oder mehreren polaren Comonomer(en), ausgewählt aus $(C_1-C_6)$-Alkylacrylat- oder $(C_1-C_6)$-Alkyl$(C_1-C_6)$-Alkylacrylat-Comonomer(en), wobei das Copolymer (a2) Silangruppe(n) enthaltende Einheiten trägt und das Copolymer (a2) von dem Copolymer (a1) verschieden ist; und

   (b) einem Ethylenpolymer, welches von dem Copolymer (a1) und dem Copolymer (a2) verschieden ist;
   wobei das Gemisch, bezogen auf die kombinierte Menge (100 Gew.-%) an Copolymer (a) und Polymer (b) umfasst,

   - mindestens 55 Gew.-%, des Copolymers aus Ethylen (a); und
   - weniger als 45 Gew.-% des Ethylenpolymers (b);

   und wobei die Polymerzusammensetzung weiterhin umfasst,
   (c) 0,01 bis 5,0 Gew.-% an Zusatzstoff(en);
   (d) 5 bis 70 Gew.-% eines klebrigmachenden Harzes; und

   eine oder mehrere oder alle der Komponenten (e) bis (g), in beliebiger Kombination:

   (e) 0 bis 50 Gew.-% eines Weichmachers;
   (f) 0 bis 50 Gew.-% einer weiteren Komponente(n) außer den Komponenten (d), (e) und (g); und/oder
   (g) 0 bis 0,1 mol/(kg Polymer von Ethylen (a)) eines Vernetzungsmittels;

   wobei die Komponenten (d) bis (g) von den Komponenten (a) bis (c) verschieden sind.

2. Polymerzusammensetzung gemäß Anspruch 1, wobei das Polymergemisch aus einem Copolymer von Ethylen (a) und einem Ethylenpolymer (b) eine oder zwei der folgenden Eigenschaften aufweist:

   - einen Sekanten-E-Modul bei 23°C (für Dehnung 0,05) von mindestens 5 MPa, vorzugsweise mindestens 10, stärker bevorzugt von mindestens 15, noch stärker bevorzugt von 5 bis 350 MPa, gemessen an Hantelproben, die aus einer vernetzten Polymermischung (ISO 527-2/5A/250, vernetzt bei 90°C im Wasserbad für 16 Stunden, wie in der Spezifikation unter "*Bestimmungsmethoden*" beschrieben) bestehen; und/oder
   - einen Sekanten-E-Modul bei 95°C (für Dehnung 0,05) von mindestens 2 MPa, vorzugsweise mindestens 4, stärker bevorzugt mindestens 6, noch stärker bevorzugt von 2 bis 200 MPa, gemessen an Hantelproben, die aus einer vernetzten Polymermischung (ISO 527-2/5A/250, vernetzt bei 90°C im Wasserbad für 16 Stunden, wie in der Spezifikation unter "*Bestimmungsmethoden*" beschrieben) bestehen;
   und/oder
   wobei die Polymermischung aus einem Copolymer von Ethylen (a) und einem Ethylenpolymer (b) ein oder zwei, oder beide, vorzugsweise beide, aufweist,
   - eine bleibende Verformung (%) bei 160°C Hot-Set-Ofen von 4 % oder weniger, und/oder
   - a Dauerhafte Verformung (%) bei 200°C Hot-Set-Ofen von 5% oder weniger;
   und/oder
   wobei die Polymermischung aus einem Copolymer von Ethylen (a) und einem Ethylenpolymer (b) ein oder zwei, oder beide, vorzugsweise beide, aufweist,
   - eine Dehnung (%) bei 160°C Hot-Set-Ofen (Dehnung (%) nach 15 min, Belastung 20 N/cm2) von 200 % oder weniger, vorzugsweise 0 bis 200 %, und/oder
   - eine Dehnung (%) bei 200°C Hot-Set-Ofen (Dehnung (%) nach 15 min, Belastung 20 N/cm2) von 60 % oder weniger, vorzugsweise 0 bis 60 %;
   und/oder
   wobei die Polymermischung aus einem Copolymer von Ethylen (a) und einem Ethylenpolymer (b) ein oder zwei, oder beide, vorzugsweise beide, aufweist,

- eine Reißfestigkeit (MPa) bei 23°C von 5 MPa oder mehr, vorzugsweise von 7 oder mehr, vorzugsweise von 7 bis 50, MPa, gemessen an Hantelproben, die aus einer vernetzten Polymermischung (ISO 527-2/5A/250, vernetzt bei 90°C im Wasserbad für 16 h) bestehen, und/oder

- a Reißfestigkeit (MPa) bei 95°C von 1 MPa oder mehr, vorzugsweise von 1,5 oder mehr, vorzugsweise von 2 bis 30, MPa, gemessen an Hantelproben, die aus einer vernetzten Polymermischung (ISO 527-2/5A/250, vernetzt bei 90°C im Wasserbad für 16 Stunden) bestehen;

und/oder

wobei die Polymermischung aus einem Copolymer von Ethylen (a) und einem Ethylenpolymer (b) ein oder zwei, oder beide, vorzugsweise beide, aufweist,

- eine Bruchdehnung (%) bei 23°C von 100 % oder mehr, vorzugsweise 150 oder mehr, vorzugsweise von 40 bis 600, %, gemessen an Hantelproben, die aus einer vernetzten Polymermischung (ISO 527-2/5A/250, vernetzt bei 90°C im Wasserbad für 16 Stunden) bestehen und/oder

- eine Bruchdehnung (%) bei 95°C von 20 % oder mehr, vorzugsweise 40 oder mehr, vorzugsweise von 20 bis 500, %, gemessen an Hantelproben, die aus einer vernetzten Polymermischung (ISO 527-2/5A/250, vernetzt bei 90°C im Wasserbad für 16 Stunden) bestehen.

**3.** Polymerzusammensetzung gemäß Anspruch 1 oder 2, wobei die Mischung, bezogen auf die kombinierte Menge (100 Gew.-%) von Copolymer (a) und Polymer (b), umfasst;

- 55 bis 95 Gew.-% des Copolymers aus Ethylen (a); und
- 5 bis 45 Gew.-% des Ethylenpolymers (b), vorzugsweise ein Copolymer von Ethylen (b); und

wobei die Polymerzusammensetzung (100 Gew.-%) weiterhin umfasst:

- 0,05 bis 4-0 Gew.-% Zusatzstoff(e) (c); und/oder
- 0,00001 bis 0,1 mol/(kg Polymer von Ethylen (a)) eines Vernetzungsmittels (g).

**4.** Polymerzusammensetzung gemäß einem der Ansprüche 1 bis 3, die einen Weichmacher (e) umfasst, vorzugsweise beträgt die Menge des Weichmachers (e) 2,0 bis 50 Gew.-%, bezogen auf die Gesamtmenge (100 Gew.-%) der Polymerzusammensetzung.

**5.** Polymerzusammensetzung gemäß einem der vorhergehenden Ansprüche, wobei das polare Comonomer des Polymers aus Ethylen (a2) ausgewählt ist aus einem oder mehreren ($C_1$-$C_6$)-Alkylacrylat-Comonomeren, vorzugsweise aus ($C_1$-$C_6$)-Alkylacrylat-Comonomeren, vorzugsweise aus Methylacrylat-, Ethylacrylat- oder Butylacrylat-Comonomeren.

**6.** Polymerzusammensetzung gemäß einem der vorhergehenden Ansprüche, wobei das polare Comonomer in dem Copolymer aus Ethylen (a2) in einer Menge von 2,5 bis 18 Mol-% vorhanden ist, vorzugsweise ist das polare Comonomer ausgewählt aus ($C_1$-$C_6$)-Alkylacrylat-Comonomer, mehr bevorzugt aus Methylacrylat-, Ethylacrylat- oder Butylacrylat-Comonomer.

**7.** Polymerzusammensetzung gemäß einem der vorhergehenden Ansprüche, wobei das Ethylenpolymer (b) ein Copolymer von Ethylen mit einem oder mehreren alpha-Olefin-Comonomer(en), vorzugsweise mit einem oder mehreren ($C_3$-$C_{12}$)-alpha-Olefin-Comonomer(en), vorzugsweise mit einem oder mehreren ($C_4$-$C_{10}$)-alpha-Olefin-Comonomer(en), vorzugsweise Octen-Comonomer, ist.

**8.** Polymerzusammensetzung gemäß einem der vorhergehenden Ansprüche, wobei das Ethylenpolymer (b) vorzugsweise eine oder alle, vorzugsweise alle, der folgenden Eigenschaften aufweist

- eine Dichte von 860 bis 970 kg/m$^3$,
- MFR$_2$ von 0,1 bis 2000 g/10 min, und/oder
- Schmelztemperatur (Tm) von 130 oder weniger, vorzugsweise von 85 bis 130 °C.

**9.** Polymerzusammensetzung gemäß einem der vorhergehenden Ansprüche, wobei das Silan-Comonomer des Copolymers von Ethylen (a1) oder die Silangruppe(n) enthaltende Einheit des Copolymers von Ethylen (a2) eine hydrolysierbare ungesättigte Silanverbindung ist, die durch die Formel (I) dargestellt wird:

$$R^1SiR^2_qY_{3-q} \qquad (I)$$

wobei

$R^1$ eine ethylenisch ungesättigte Hydrocarbyl-, Hydrocarbyloxy- oder (Meth)acryloxy-Hydrocarbylgruppe ist, jedes $R^2$ unabhängig eine aliphatische gesättigte Hydrocarbylgruppe ist, Y, das gleich oder verschieden sein kann, eine hydrolysierbare organische Gruppe ist und

q 0, 1 oder 2 ist;

vorzugsweise beträgt die Menge an Silangruppe(n) enthaltendem Comonomer, das in dem Copolymer aus Ethylen (a1) vorhanden ist, oder die Menge an Silangruppe(n) enthaltenden Einheiten, die in dem Copolymer aus Ethylen (a2) vorhanden sind, mindestens 0,06 bis 2 Mol-%;

vorzugsweise ist die Silangruppe(n) enthaltende Einheit des Copolymers von Ethylen (a2) ein Silangruppe(n) enthaltendes Comonomer, d.h. die Silangruppe(n) enthaltende(n) Einheit(en) (b) des Copolymers (a2) sind in dem Copolymer von Ethylen (a2) als Comonomer vorhanden;

Vorzugsweise werden das Copolymer von Ethylen (a1) und das Copolymer von Ethylen (a2) durch Polymerisation in einem Hochdruckpolymerisationsverfahren unter Verwendung eines Radikalinitiators hergestellt.

10. Polymerzusammensetzung gemäß einem der vorhergehenden Ansprüche, wobei die Polymerzusammensetzung, vorzugsweise zumindest das Copolymer von Ethylen (a), vernetzbar ist, vorzugsweise wobei die Polymerzusammensetzung das Vernetzungsmittel (g) umfasst, vorzugsweise wobei die Polymerzusammensetzung das Vernetzungsmittel (g) in einer Menge von 0,00001 bis 0,1 mol/kg Polymer von Ethylen (a) umfasst;

vorzugsweise wird die Copolymerzusammensetzung gemäß einem der vorhergehenden Ansprüche 1 bis 9 in Gegenwart des Vernetzungsmittels (g) vernetzt.

11. Polymerzusammensetzung gemäß einem der vorhergehenden Ansprüche, wobei das optionale Vernetzungsmittel (g) ausgewählt ist aus einem Silanolkondensationskatalysator (SCC), der vorzugsweise ausgewählt ist aus der Gruppe C von Carboxylaten von Metallen, wie Zinn, Zink, Eisen, Blei und Kobalt; aus einer Titanverbindung, die eine zu einer Brönsted-Säure hydrolysierbare Gruppe trägt, aus organischen Basen; aus anorganischen Säuren; und aus organischen Säuren; geeignet aus Carboxylaten von Metallen, wie Zinn, Zink, Eisen, Blei und Kobalt, aus einer Titanverbindung, die eine zu einer Brönsted-Säure hydrolysierbare Gruppe trägt, wie oben definiert, oder aus organischen Säuren, geeignet aus Dibutylzinndilaurat (DBTL), Dioctylzinndilaurat (DOTL); einer Titanverbindung, die eine zu einer Brönsted-Säure hydrolysierbare Gruppe trägt, wie oben definiert; oder einer aromatischen organischen Sulfonsäure, die geeignet eine organische Sulfonsäure ist, die das Strukturelement umfasst:

$$Ar(SO_3H)_x \qquad (II)$$

worin Ar eine Arylgruppe ist, die substituiert oder unsubstituiert sein kann, und wenn sie substituiert ist, dann zweckmäßigerweise mit mindestens einer Hydrocarbylgruppe mit bis zu 50 Kohlenstoffatomen, und x mindestens 1 ist; oder ein Vorläufer der Sulfonsäure der Formel (II), einschließlich eines Säureanhydrids davon, oder eine Sulfonsäure der Formel (II), die mit einer hydrolysierbaren Schutzgruppe(n), z.B. einer Acetylgruppe, die durch Hydrolyse entfernbar ist, versehen wurde.

12. Gegenstand, umfassend mindestens ein Substrat und eine Polymerzusammensetzung nach einem der vorstehenden Ansprüche 1 bis 11 auf dem Substrat, vorzugsweise ein Gegenstand, umfassend mindestens ein Substrat und eine Klebstoffschicht, umfassend die Polymerzusammensetzung nach einem der vorstehenden Ansprüche 1 bis 11 auf dem Substrat.

13. Gegenstand gemäß Anspruch 12, der ein Mehrschichtelement umfasst, das

- ein Substrat,
- eine Klebstoffschicht auf dem Substrat und
- eine Deckschicht auf der Klebeschicht;

wobei die Klebeschicht die Ethylenpolymerzusammensetzung nach einem der Ansprüche 1 bis 11 umfasst.

14. Gegenstand gemäß Anspruch 12 oder 13, wobei das Vernetzungsmittel (g) in der Polymerzusammensetzung vorhanden ist und die Polymerzusammensetzung in Gegenwart des Vernetzungsmittels (g) vernetzt wird, wobei der Gegenstand zweckmäßigerweise das Mehrschichtelement nach Anspruch 13 umfasst, und wobei die Klebeschicht das Vernetzungsmittel (g) umfasst, wobei vorzugsweise die Polymerzusammensetzung der Klebeschicht in Gegenwart des Vernetzungsmittels (g) vernetzt wird.

15. Verfahren zur Herstellung eines Gegenstandes nach einem der vorhergehenden Ansprüche 12 bis 14, wobei das Verfahren die folgenden Schritte umfasst:

(i) Mischen, vorzugsweise Schmelzmischen der Polymermischung aus einem Copolymer von Ethylen (a) und einem Ethylenpolymer (b), einem Teil oder der Gesamtheit des/der Additivs/Zusatzstoffe (c) und einem Teil oder der Gesamtheit der optionalen Komponenten (d) bis (g) der Polymerzusammensetzung gemäß einem der vorhergehenden Ansprüche 1 bis 16 bei erhöhter Temperatur, um eine Schmelzmischung der Polymerzusammensetzung zu bilden;
(ii) Aufbringen der erhaltenen Schmelzmischung der Polymerzusammensetzung auf mindestens eine Oberfläche eines Substrats, um eine Klebeschicht auf dem Substrat zu bilden; optional
(iii) Unterziehen einer Deckschicht auf der gebildeten Klebstoffschicht; optional
(iv) Vernetzen der Klebstoffschicht in Gegenwart eines Vernetzungsmittels (g); und
(v) die Rückgewinnung des erhaltenen Gegenstandes.

## Revendications

1. Composition de polymère d'éthylène pour applications adhésives qui comprend 10,0 à 80,0 % en poids d'un mélange de polymères de

(a) un copolymère d'éthylène qui est choisi parmi

(a1) un copolymère d'éthylène avec un comonomère contenant un ou plusieurs groupes silane ; ou
(a2) un copolymère d'éthylène avec un ou plusieurs comonomères polaires choisis parmi les comonomères acrylates d'alkyle en $C_1$ à $C_6$ ou (alkyle en $C_1$ à $C_6$) acrylates d'alkyle en $C_1$ à $C_6$, lequel copolymère (a2) porte un ou plusieurs motifs contenant des groupes silane et lequel copolymère (a2) est différent du copolymère (a1) ; et

(b) un polymère d'éthylène qui est différent du copolymère (a1) et du copolymère (a2) ;
dans lequel le mélange comprend, basés sur la quantité combinée (100 % en poids) de copolymère (a) et de polymère (b),

- au moins 55 % en poids du copolymère d'éthylène (a) ; et
- moins de 45 % en poids du polymère d'éthylène (b) ;
et laquelle composition de polymère comprend en outre

(c) 0,01 à 5,0 % en poids d'un ou plusieurs additifs ;
(d) 5 à 70 % en poids d'une résine donnant du collant ; et

un ou plusieurs, ou la totalité, des composants (e) à (g), en n'importe quelle combinaison :

(e) 0 à 50 % en poids d'un plastifiant ;
(f) 0 à 50 % en poids d'un ou plusieurs autres composants différents des composants (d), (e) et (g) ; et/ou
(g) 0 à 0,1 mol/(kg de polymère d'éthylène (a)) d'un agent de réticulation ;

dans laquelle les composants (d) à (g) sont différents des composants (a) à (c).

2. Composition de polymère selon la revendication 1, dans laquelle le mélange de polymères d'un copolymère d'éthylène (a) et d'un polymère d'éthylène (b) a une ou deux des propriétés suivantes :

- un module E sécant à 23°C (pour une déformation de 0,05) d'au moins 5 MPa, de préférence d'au moins 10, plus préférablement d'au moins 15, encore plus préférablement de 5 à 350 MPa, quand il est mesuré à partir d'éprouvettes en haltère constituées d'un mélange de polymères réticulé (ISO 527-2/5A/250, réticulé à 90°C dans un bain d'eau pendant 16 heures comme décrit dans le fascicule à la rubrique "Procédés de détermination") ; et/ou
- un module E sécant à 95°C (pour une déformation de 0,05) d'au moins 2 MPa, de préférence d'au moins 4, plus préférablement d'au moins 6, encore plus préférablement de 2 à 200 MPa, quand il est mesuré à partir d'éprouvettes en haltère constituées d'un mélange de polymères réticulé (ISO 527-2/5A/250, réticulé à 90°C dans un bain d'eau pendant 16 heures comme décrit dans le fascicule à la rubrique "Procédés de détermination") ;

et/ou

dans laquelle le mélange de polymères d'un copolymère d'éthylène (a) et d'un polymère d'éthylène (b) a une ou deux, de préférence les deux, parmi

- une déformation permanente (%) à 160°C dans un four de test de température de 4 % ou moins, et/ou
- une déformation permanente (%) à 200°C dans un four de test de température de 5 % ou moins ;

et/ou

dans laquelle le mélange de polymères d'un copolymère d'éthylène (a) et d'un polymère d'éthylène (b) a un ou deux, de préférence les deux, parmi

- un allongement (%) à 160°C dans un four de test de température (allongement (%) après 15 minutes, charge 20 N/cm$^2$) de 200 % ou moins, de préférence de 0 à 200 %, et/ou
- un allongement (%) à 200°C dans un four de test de température (allongement (%) après 15 minutes, charge 20 N/cm$^2$) de 60 % ou moins, de préférence de 0 à 60 % ;

et/ou

dans laquelle le mélange de polymères d'un copolymère d'éthylène (a) et d'un polymère d'éthylène (b) a une ou deux, de préférence les deux, parmi

- une résistance à la traction à la rupture (MPa) à 23°C de 5 MPa ou plus, de préférence de 7 ou plus, de préférence de 7 à 50 MPa, quand elle est mesurée à partir d'éprouvettes en haltère constituées d'un mélange de polymères réticulé (ISO 527-2/5A/250, réticulé à 90°C dans un bain d'eau pendant 16 heures), et/ou
- une résistance à la traction à la rupture (MPa) à 95°C de 1 MPa ou plus, de préférence de 1,5 ou plus, de préférence de 2 à 30 MPa, quand elle est mesurée à partir d'éprouvettes en haltère constituées d'un mélange de polymères réticulé (ISO 527-2/5A/250, réticulé à 90°C dans un bain d'eau pendant 16 heures) ;

et/ou

dans laquelle le mélange de polymères d'un copolymère d'éthylène (a) et d'un polymère d'éthylène (b) a un ou deux, de préférence les deux, parmi

- un allongement à la rupture (%) à 23°C de 100 % ou plus, de préférence de 150 ou plus, de préférence de 40 à 600 %, quand il est mesuré à partir d'éprouvettes en haltère constituées d'un mélange de polymères réticulé (ISO 527-2/5A/250, réticulé à 90°C dans un bain d'eau pendant 16 heures) ; et/ou
- un allongement à la rupture (%) à 95°C de 20 % ou plus, de préférence de 40 ou plus, de préférence de 20 à 500 %, quand il est mesuré à partir d'éprouvettes en haltère constituées d'un mélange de polymères réticulé (ISO 527-2/5A/250, réticulé à 90°C dans un bain d'eau pendant 16 heures) .

3. Composition de polymère selon la revendication 1 ou 2,
dans laquelle le mélange comprend, basés sur la quantité combinée (100 % en poids) de copolymère (a) et de polymère (b) :

- 55 à 95 % en poids du copolymère d'éthylène (a) ; et
- 5 à 45 % en poids du polymère d'éthylène (b), de préférence d'un copolymère d'éthylène (b) ;

et dans laquelle la composition de polymère (100 % en poids) comprend en outre :

- 0,05 à 4,0 % en poids d'un ou plusieurs additifs (c) ; et/ou
- 0,00001 à 0,1 mol/(kg de polymère d'éthylène (a)) d'un agent de réticulation (g).

4. Composition de polymère selon l'une quelconque des revendications 1 à 3, qui comprend un plastifiant (e), de préférence la quantité de plastifiant (e) est de 2,0 à 50 % en poids basés sur la quantité totale (100 % en poids) de la composition de polymère.

5. Composition de polymère selon l'une quelconque des revendications précédentes, dans laquelle le comonomère polaire du polymère d'éthylène (a2) est un ou plusieurs choisis parmi les comonomères acrylates d'alkyle en $C_1$ à $C_6$, un de préférence parmi les comonomères acrylates d'alkyle en $C_1$ à $C_6$, de préférence parmi les comonomères acrylate de méthyle, acrylate d'éthyle ou acrylate de butyle.

6. Composition de polymère selon l'une quelconque des revendications précédentes, dans laquelle le comonomère polaire est présent dans le copolymère d'éthylène (a2) en une quantité de 2,5 à 18 % en moles, de préférence le comonomère polaire est choisi parmi les comonomères acrylates d'alkyle en $C_1$ à $C_6$, plus préférablement parmi les comonomères acrylate de méthyle, acrylate d'éthyle ou acrylate de butyle.

7. Composition de polymère selon l'une quelconque des revendications précédentes, dans laquelle le polymère d'éthylène (b) est un copolymère d'éthylène avec un ou plusieurs comonomères alpha-oléfines, de préférence avec un ou plusieurs comonomères alpha-oléfines en $C_3$ à $C_{12}$, de préférence avec un ou plusieurs comonomères alpha-oléfines en $C_4$ à $C_{10}$, de préférence le comonomère octène.

8. Composition de polymère selon l'une quelconque des revendications précédentes, dans laquelle le polymère d'éthylène (b) a de préférence une ou la totalité, de préférence la totalité, des propriétés ci-dessous :

   - une masse volumique de 860 à 970 kg/m$^3$,
   - un MFR$_2$ de 0,1 à 2000 g/10 min, et/ou
   - un point de fusion (Tm) de 130°C ou moins, de préférence de 85 à 130°C.

9. Composition de polymère selon l'une quelconque des revendications précédentes, dans laquelle le comonomère silane du copolymère d'éthylène (a1) ou le motif contenant un ou plusieurs groupes silane du copolymère d'éthylène (a2) est un composé silane insaturé hydrolysable représenté par la formule (I) :

   $$R^1SiR^2_qY_{3-q} \qquad (I)$$

   dans laquelle

   $R^1$ est un groupe hydrocarbyle, hydrocarbyloxy ou (méth)acryloxy-hydrocarbyle à insaturation éthylénique,
   chaque $R^2$ est indépendamment un groupe hydrocarbyle saturé aliphatique,
   Y, qui peut être identique ou différent, est un groupe organique hydrolysable et
   q vaut 0, 1 ou 2 ;
   de préférence la quantité du comonomère contenant un ou plusieurs groupes silane présent dans le copolymère d'éthylène (a1) ou la quantité de motifs contenant un ou plusieurs groupes silane présents dans le copolymère d'éthylène (a2) est d'au moins 0,06 à 2 % en moles ;
   de préférence le motif contenant un ou plusieurs groupes silane du copolymère d'éthylène (a2) est un comonomère contenant un ou plusieurs groupes silane, c'est-à-dire que des motifs contenant un ou plusieurs groupes silane (b) du copolymère (a2) sont présents dans le copolymère d'éthylène (a2) en tant que comonomère ;
   de préférence le copolymère d'éthylène (a1) et le copolymère d'éthylène (a2) sont produits par polymérisation dans un procédé de polymérisation sous haute pression utilisant un amorceur radicalaire.

10. Composition de polymère selon l'une quelconque des revendications précédentes, dans laquelle, dans la composition de polymère, de préférence au moins le copolymère d'éthylène (a) est réticulable, de préférence dans laquelle la composition de polymère comprend l'agent de réticulation (g), de préférence dans laquelle la composition de polymère comprend l'agent de réticulation (g) en une quantité de 0,00001 à 0,1 mol/kg de polymère d'éthylène (a) ; de préférence la composition de copolymère selon l'une quelconque des revendications 1 à 9 est réticulée en présence de l'agent de réticulation (g).

11. Composition de polymère selon l'une quelconque des revendications précédentes, dans laquelle l'agent de réticulation optionnel (g) est choisi parmi un catalyseur de condensation de silanol (SCC), qui est de préférence choisi dans le groupe C des carboxylates de métaux, tels que l'étain, le zinc, le fer, le plomb et le cobalt ; parmi un composé du titane portant un groupe hydrolysable en un acide de Brönsted, parmi les bases organiques ; parmi les acides inorganiques ; et parmi les acides organiques ; convenablement parmi les carboxylates de métaux, tels que l'étain, le zinc, le fer, le plomb et le cobalt, parmi un composé du titane portant un groupe hydrolysable en un acide de Brönsted comme défini ci-dessus ou parmi les acides organiques, convenablement parmi le dilaurate de dibutyl-étain (DBTL), le dilaurate de dioctyl-étain (DOTL) ; un composé du titane portant un groupe hydrolysable en un acide de Brönsted tel que défini ci-dessus ; ou un acide sulfonique organique aromatique, qui est convenablement un acide sulfonique organique qui comprend l'élément structurel :

   $$Ar(SO_3H)_x \qquad (II)$$

   dans lequel Ar est un groupe aryle qui peut être substitué ou non substitué, et s'il est substitué, alors il l'est convenablement avec au moins un groupe hydrocarbyle ayant jusqu'à 50 atomes de carbone, et x vaut au moins 1 ; ou un précurseur de l'acide sulfonique de formule (II), y compris un anhydride d'acide de celui-ci ou un acide sulfonique de formule (II) qui a été doté d'un ou plusieurs groupes protecteurs hydrolysables, par exemple un groupe acétyle qui est éliminable par hydrolyse.

12. Article comprenant au moins un substrat et une composition de polymère selon l'une quelconque des revendications 1 à 11 sur ledit substrat, de préférence un article comprenant au moins un substrat et une couche adhésive comprenant la composition de polymère selon l'une quelconque des revendications 1 à 11 sur ledit substrat.

13. Article selon la revendication 12, qui comprend un élément multicouche comprenant

- un substrat,
- une couche adhésive sur ledit substrat et
- une couche supérieure sur ladite couche adhésive ; dans lequel la couche adhésive comprend la composition de polymère selon l'une quelconque des revendications 1 à 11.

14. Article selon la revendication 12 ou 13, dans lequel l'agent de réticulation (g) est présent dans la composition de polymère et la composition de polymère est réticulée en présence de l'agent de réticulation (g), convenablement dans lequel l'article comprend l'élément multicouche tel que défini dans la revendication 13, et dans lequel la couche adhésive comprend l'agent de réticulation (g), de préférence la composition de polymère de la couche adhésive est réticulée en présence de l'agent de réticulation (g).

15. Procédé pour produire un article selon l'une quelconque des revendications 12 à 14, dans lequel le procédé comprend les étapes de :

(i) mélange, de préférence mélange à l'état fondu, du mélange de polymères d'un copolymère d'éthylène (a) et d'un polymère d'éthylène (b), de tout ou partie du ou des additifs (c) et de tout ou partie des composants optionnels (d) à (g) de la composition de polymères selon l'une quelconque des revendications 1 à 11 à une température élevée pour former un mélange fondu de la composition de polymère ;
(ii) application du mélange fondu obtenu de la composition de polymère sur au moins une surface d'un substrat pour former une couche adhésive sur le substrat ; optionnellement
(iii) soumission d'une couche supérieure sur la couche adhésive formée ; optionnellement
(iv) réticulation de la couche adhésive en présence d'un agent de réticulation (g) ; et
(v) récupération de l'article obtenu.

**Figure 1(a)**

**Figure 1(b)**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150240135 A
- WO 2008049637 A
- WO 2015200016 A
- WO 2009002845 A
- US 2007027250 A

- WO 2011160964 A
- EP 736065 A
- EP 1309631 A
- EP 1309632 A

**Non-patent literature cited in the description**

- Encyclopedia of Polymer Science and Engineering. 1986, vol. 6, 383-410
- Polyethylene: High-pressure. **R. KLIMESCH ; D. LITTMANN ; F.-O. MÄHLING.** Encyclopedia of Materials: Science and Technology. Elsevier Science Ltd, 2001, 7181-7184

- Plastic Additives Handbook. Hans Zweifel, 2001
- **J. RANDALL.** *Macromol. Sci., Rev. Macromol. Chem. Phys.,* 1989, vol. C29, 201